(19) **Europäisches Patentamt**

**European Patent Office**

**Office européen des brevets**

(11) **EP 1 635 495 A1**

(12) **EUROPEAN PATENT APPLICATION**
published in accordance with Art. 158(3) EPC

(43) Date of publication:
15.03.2006 Bulletin 2006/11

(51) Int Cl.:
*H04J 11/00* (1974.07)

(21) Application number: 04747773.2

(22) Date of filing: 14.07.2004

(86) International application number:
PCT/JP2004/010357

(87) International publication number:
WO 2005/006622 (20.01.2005 Gazette 2005/03)

(84) Designated Contracting States:
DE FR GB

(30) Priority: 14.07.2003 JP 2003274366

(71) Applicant: MATSUSHITA ELECTRIC INDUSTRIAL CO., LTD.
Kadoma-shi, Osaka 571-8501 (JP)

(72) Inventors:
• FUKUOKA, Masaru
Ishikawa 920-0342 (JP)
• YOSHII, Isamu
Chiba 279-0014 (JP)

• FUTAGI, Sadaki
Ishikawa 929-0224 (JP)
• MATSUMOTO, Atsushi
Ishikawa 920-0021 (JP)
• KITAHARA, Takashi
Nomi-gun,
Ishikawa 923-1112 (JP)

(74) Representative: Grünecker, Kinkeldey,
Stockmair & Schwanhäusser
Anwaltssozietät
Maximilianstrasse 58
D-80538 München (DE)

(54) **MULTI-CARRIER TRANSMITTER APPARATUS, MULTI-CARRIER RECEIVER APPARATUS, AND MULTI-CARRIER COMMUNICATION METHOD**

(57) Multicarrier transmission apparatus 100 receives channel quality information of subcarriers from multicarrier reception apparatus 200 and interleave pattern setting section 108 sets an interleave pattern according to channel quality of subcarriers.

Interleaver 106 interleaves I components and/or Q components of symbols using the set interleave pattern. As a result, it is possible to optimize diversity gains in modulation diversity modulation/demodulation according to channel quality.

FIG.3

**Description**

Technical Field

The present invention relates to a multicarrier transmission apparatus, multicarrier reception apparatus and multicarrier communication method using a modulation diversity technology in particular.

Background Art

A multicarrier communication apparatus using an OFDM (Orthogonal Frequency Division Multiplexing) scheme is becoming a focus of attention as an apparatus capable of realizing high-speed radio transmission in recent years because of its resistance to multipath or fading and ability to carry out high quality communication.. Furthermore, there is a proposal to apply a technology called a "modulation diversity modulation/demodulation" to a multicarrier communication to further improve communication quality.

Modulation diversity modulation/demodulation in a conventional multicarrier communication apparatus is described in a document "3GPP TSG RAN WG1 #31 R1-030156 "Modulation diversity for OFDM.""

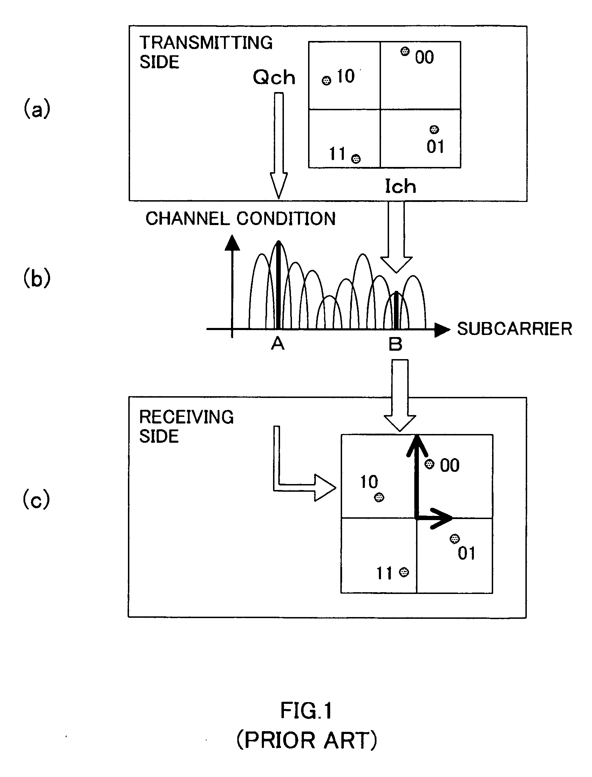

This modulation diversity modulation/demodulation will be explained briefly using FIG.1. FIG.1 shows a case where QPSK (Quadrature Phase Shift Keying) is performed as an example of modulation scheme. A transmitter rotates the phases of symbols mapped to an IQ plane by a predetermined angle as shown in (a) of FIG.1. Next, the transmitter interleaves an Ich component and Qch component using separate uniform or random interleavers for the Ich and Qch. This causes the signal after an inverse Fourier transform (IFFT) to be assigned to subcarriers having Ich components and Qch components of symbols which are different from those before interleaving as shown in (b) of FIG.1. In the case of (b) of FIG.1, the Ich components are assigned to subcarrier B and the Qch components are assigned to subcarrier A.

A receiver extracts the Ich components and Qch components superimposed on the subcarriers by carrying out a fast Fourier transform (FFT) first. Next, the Ich and Qch are restored to their original arrays by carrying out deinterleaving. Then, the receiver obtains received data by carrying out demapping processing based on a constellation of the Ich and Qch restored to their original arrays.

Here, suppose subcarrier A has a good channel condition and subcarrier B has a bad channel condition, which results in a constellation which is one-sided toward the Qch direction as shown in (c) of FIG.1. This allows signal points in the constellation to be kept relatively far from one another making it possible to reconstruct bits in a packet averagely correctly during demapping. Thus, modulation diversity modulation/demodulation can achieve an effect similar to that of distributing SNR (Signal-to-Noise Ratio) in the subcarrier directions and carrying out corrections even when fading variations occur in the respective subcarriers due to multipath fading. As a result, modulated symbols are affected by a variation as if they were transmitted through an AWGN (Additive White Gaussian Noise) communication path, and therefore it is possible to obtain a diversity gain.

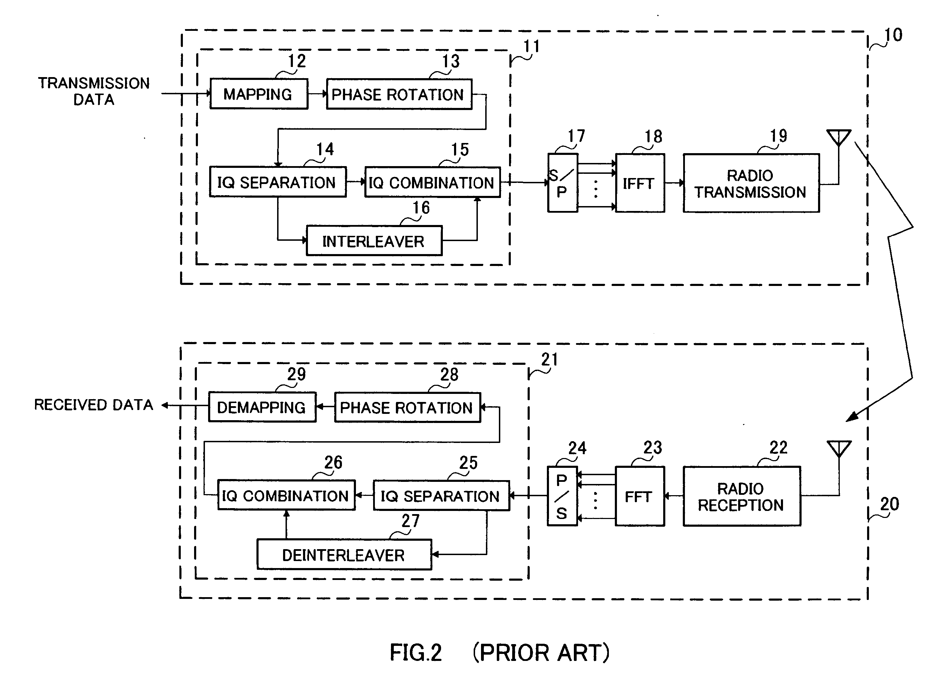

FIG.2 shows the configuration of multicarrier transmission apparatus 10 that carries out modulation diversity transmission processing and multicarrier reception apparatus 20 that receives and demodulates the signal.

Multicarrier transmission apparatus 10 includes modulation diversity modulation section 11 and inputs transmission data to mapping section 12 of modulation diversity modulation section 11. Mapping section 12 maps transmission data to the IQ plane according to a modulation scheme such as BPSK (Binariphase Phase Shift Keying), QPSK (Quadrature Phase Shift Keying), 16QAM (Quadrature Amplitude Modulation).

The phases of the mapped symbols are rotated by a predetermined angle at phase rotation section 13 as shown in (a) of FIG.1. The phase-rotated symbols are separated into Ich components and Qch components by IQ separation section 14, one of the Ich component and Qch component is sent to interleaver 16 and the other is sent to IQ combination section 15. The Ich component or Qch component interleaved in an interleave pattern predetermined by interleaver 16 are sent to IQ combination section 15.

IQ combination section 15 restores the constellation by combining the Ich components and Qch components. Modulation diversity modulation symbols are obtained in this way. The modulation diversity modulation symbols are superimposed on predetermined subcarriers by serial/parallel conversion section (S/P) 17 and inverse fast Fourier transform section (IFFT). That is, serial/parallel conversion section (S/P) 17 and inverse fast Fourier transform section (IFFT) 18 assign the modulation diversity modulation symbols to any one of a plurality of subcarriers which are orthogonal to each other and modulate the subcarriers sequentially using the modulation diversity modulation symbols.

Thus, interleaver 16 of multicarrier transmission apparatus 10 carries out interleave processing on any one of the I component and Q component, and therefore one of the I component and Q component is fixed to one subcarrier but the other component is placed on a subcarrier which varies depending on the interleave pattern. The signal after IFFT processing is subjected to radio transmission processing such as analog/digital conversion processing and up-conversion by radio transmission section 19 and transmitted via an antenna.

Multicarrier reception apparatus 20 that receives and demodulates a signal transmitted from multicarrier transmission apparatus 10 includes modulation diversity demodulation section 21. Multicarrier reception apparatus 20 applies radio reception processing such as down-conversion and analog/digital conversion processing on a radio signal received via an antenna using radio reception section 22 and then sends the signal to fast Fourier transform section (FFT) 23. FFT section 23 extracts the modulation diversity modulation symbols superimposed on the respective subcarriers. These modulation diversity modulation symbols superimposed on the subcarriers are sent to IQ separation section 25 of modulation diversity demodulation section 21 via parallel/serial conversion section (P/S) 24.

IQ separation section 25 separates the symbols into I components and Q components. Then, IQ separation section 25 sends components which have not been interleaved on the transmitting side out of the separated components directly to IQ combination section 26 and sends the components which have been interleaved on the transmitting side to deinterleaver 27. Deinterleaver 27 restores the interleaved components to the original array by carrying out the reverse processing of interleaver 16 and sends them to IQ combination section 26. As a result, the IQ combination section obtains symbols consisting of pairs of original I components and Q components as the combination result.

Phase rotation section 28 rotates the phase of the combined symbol in the opposite direction by the same angle as that of phase rotation section 13 on the transmitting side. Demapping section 29 outputs received data in accordance with the symbol constellation after the phase rotation.

As described above, if modulation diversity modulation/demodulation is applied to an OFDM scheme, transmission can be performed with the I component and Q component of a modulated symbol arranged on different subcarriers, and therefore even when the channel condition of a certain subcarrier is bad due to frequency selective fading during transmission, it is possible to obtain correct received data if the channel condition of the subcarrier on which one of the I component and Q component is placed is good. As a result, it is possible to improve an error correction rate characteristic of the received data.

However, since a conventional modulation diversity modulation/demodulation uses an interleaver in a predetermined interleave pattern, the reception sensitivities of the Ich component and Qch component of transmission symbols vary without any correlation due to effects of frequency selective fading. For this reason, channel conditions of both the subcarrier to which Ich is assigned and the subcarrier to which Qch is assigned may be improved. On the contrary, channel conditions of both the subcarrier to which Ich is assigned and the subcarrier to which Qch is assignedmay deteriorate. This may result in deterioration of the error correction rate characteristic without obtaining any effective diversity gain.

Disclosure of Invention

It is an object of the present invention to provide a multicarrier transmission apparatus, multicarrier reception apparatus and multicarrier communication method capable of further improving an error correction rate characteristic when a modulation diversity technology is used.

This object can be attained when modulation diversity modulation/demodulation is performed by adaptively changing an interleave pattern and deinterleave pattern of modulation diversity modulation/demodulation according to channel quality of subcarriers.

Brief Description of Drawings

FIG. 1 illustrates principles of modulation diversity modulation/demodulation;
FIG.2 is a block diagram showing the configuration of a multicarrier transmission apparatus and multicarrier reception apparatus to realize conventional modulation diversity modulation/demodulation;
FIG.3 is a block diagram showing the configuration of a multicarrier transmission apparatus and multicarrier reception apparatus according to Embodiment 1 of the present invention;
FIG.4 is a timing chart showing exchanges of control information and data between multicarrier transmission/reception apparatuses according to the embodiment;
FIG.5A illustrates a propagation path variation (scaling factor) ofsubcarriers;
FIG. 5B is a diagram provided to illustrate an explanation of the operation of the multicarrier transmission apparatus according to the embodiment when subcarriers change as shown in FIG.5A;
FIG. 6 illustrates a signal point position after BPSK modulation when the phase of the signal is rotated by 45°;
FIG.7 illustrates a signal point position before demapping of modulation diversity modulation symbols obtained by Embodiment 1;
FIG. 8 is a characteristic curve diagram showing a comparison of an average error rate of conventional modulation diversity modulation/demodulation and that of modulation diversity modulation/demodulation according to this embodiment;

FIG.9 is a block diagram showing the configurations of a multicarrier transmission apparatus and multicarrier reception apparatus according to Embodiment 2;

FIG.10 is a block diagram showing the configuration of an interleave pattern setting section according to Embodiment 2;

FIG. 11 is a block diagram showing the configurations of a multicarrier transmission apparatus and multicarrier reception apparatus according to Embodiment 3;

FIG.12 is a block diagram showing the configuration of an interleave pattern setting section according to Embodiment 3;

FIG.13A illustrates SNR values of subcarriers;

FIG.13B shows an example of feedback information according to Embodiment 4;

FIG.14A illustrates SNR values of subcarriers;

FIG.14B shows an example of feedback information according to Embodiment 4;

FIG.15A illustrates SNR values of subcarriers;

FIG.15B shows an example of feedback information according to Embodiment 4;

FIG.16A illustrates SNR values of subcarriers;

FIG.16B illustrates subcarrier numbers in descending order of a channel condition as feedback information 1;

FIG.16C illustrates subcarrier numbers in ascending order of a channel condition as feedback information 2;

FIG.16D illustrates subcarrier numbers which are not sent as feedback information;

FIG. 17 is a diagram provided to illustrate a method of interleaving on subcarriers of high, medium and low channel quality according to Embodiment 4;

FIG. 18 is a diagram provided to illustrate a method of setting thresholds when classifying channel quality;

FIG.19 is a diagram provided to illustrate a relationship between a Doppler frequency, frequency of transmitting feedback information and switching between interleave methods;

FIG. 20 is a block diagram showing the configurations of a multicarrier transmission apparatus and multicarrier reception apparatus according to Embodiment 5;

FIG.21 is a diagram provided to illustrate the operation of the multicarrier transmission apparatus according to Embodiment 5;

FIG.22 illustrates reception constellations obtained by the multicarrier reception apparatus according to Embodiment 5; and

FIG.23 illustrates the operation according to Embodiment 5 when another configuration is applied.

Best Mode for Carrying out the Invention

With reference now to the attached drawings, embodiments of the present invention will be explained in detail below.

(Embodiment 1)

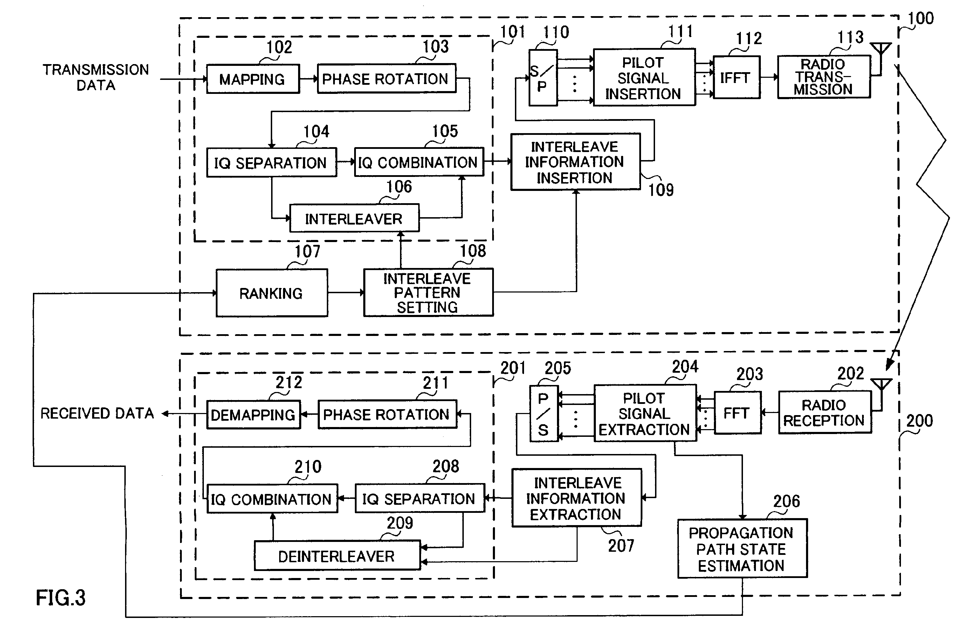

FIG.3 shows the configuration of multicarrier transmission apparatus 100 and multicarrier reception apparatus 200 according to a multicarrier communication apparatus of the present invention. Multicarrier transmission apparatus 100 is provided on a first radio station and multicarrier reception apparatus 200 is provided on a second radio station that carries out radio communication with the first radio station.

In practice, the first radio station provided with multicarrier transmission apparatus 100 includes a reception section and the second radio station provided with multicarrier reception apparatus 200 includes a transmission section, but the reception section and transmission section of this embodiment are omitted in the explanations for simplicity.

Multicarrier transmission apparatus 100 includes modulation diversity modulation section 101 and inputs transmission data to mapping section 102 of modulation diversity modulation section 101. Mapping section 102 maps the transmission data to an IQ plane according to a modulation scheme such as BPSK (Binariphase Phase Shift Keying), QPSK (Quadrature Phase Shift Keying), 16QAM (Quadrature Amplitude Modulation).

The phases of symbols after mapping are rotated by a predetermined angle at phase rotation section 103 as shown in (a) of FIG.1. Here, mapping section 102 and phase rotation section 103 function as a symbol formation section that forms symbols . The symbols whose phases have been rotated are separated into Ich components and Qch components by IQ separation section 104 and one of the Ich component and Qch component is sent to interleaver 106 and the other is sent to IQ combination section 105. In this embodiment, Ich components are directly sent to IQ combination section 105 and Qch components are sent to interleaver 106.

Interleaver 106 carries out interleave processing using an interleave pattern set by interleave pattern setting section 108. Interleave pattern setting section 108 is designed to set an interleave pattern in accordance with channel quality of subcarriers This allows multicarrier transmission apparatus 100 to obtain an effective diversity gain compared to a case where uniform or random interleave processing is performed.

The Qch component subjected to the interleave processing by interleaver 106 is sent to IQ combination section 105. IQ combination section 105 restores a constellation by combining the Ich components and Qch components. In this way, modulation diversity modulation symbols are obtained. The modulation diversity modulation symbols are sent to interleave information insertion section 109. Interleave information insertion section 109 inserts interleave pattern information set by interleave pattern setting section 108 at a predetermined position of a modulated symbol string.

Modulation diversity modulation symbols and interleave pattern information are converted to a parallel signal by serial/parallel conversion section (S/P) 110 and a pilot signal is inserted into parallel signals by pilot signal insertion section 111. The parallel signal after insertion of pilot signals is subjected to inverse fast Fourier transform processing by an inverse fast Fourier transform section (IFFT) . That is, in multicarrier transmission apparatus 100, S/P 110 and IFFT 112 as the OFDM modulation section assign each of modulation diversity modulation symbols to any one of a plurality of subcarriers which are orthogonal to one another and sequentially modulate the subcarriers using the modulation diversity modulation symbols. Radio transmission section 113 applies radio transmission processing such as analog/digital conversion processing and up-conversion to the signal after the IFFT processing and then transmits the signal via an antenna.

Multicarrier reception apparatus 200 that performs and demodulates a signal transmitted from multicarrier transmission apparatus 100 includes modulation diversity demodulation section 201. In multicarrier reception apparatus 200, radio reception section 202 carries out radio reception processing such as down-conversion and analog/digital conversion processing on the radio signal received via an antenna and then sends the signal to fast Fourier transform section (FFT) 203. FFT section 203 extracts a signal superimposed on subcarriers. The signal extracted from subcarriers is sent to pilot signal extraction section 204. Pilot signal extraction section 204 extracts pilot signals of the subcarriers and sends them to propagation path state estimation section 206 and sends the modulation diversity modulation symbols arranged on the subcarriers to parallel/serial conversion section (P/S) 205.

P/S 205 sends the signal after the parallel/serial conversion processing to interleave information extraction section 207. Interleave information extraction section 207 extracts interleave pattern information signal from the input signal and sends this information to deinterleaver 209 of modulation diversity demodulation section 201.

IQ separation section 208 separates Ich components and Qch components of the reception symbols (that is, modulation diversity modulation symbols) and directly sends the Ich components to IQ combination section 210 and sends the Qch components to deinterleaver 209. Deinterleaver 209 deinterleaves the Qch components using an interleave pattern corresponding to the interleave pattern information extracted by interleave information extraction section 207 and then sends them to IQ combination section 210. IQ combination section 210 obtains symbols before interleaving by combining the Ich components and the deinterleaved Qch components.

Phase rotation section 211 rotates the phase of the Ich components and Qch components of the symbols by the same angles as that of phase rotation section 103 on the transmitting side in an opposite direction and thereby restores the phase rotation to its original state. Demapping section 212 obtains the received data by demodulating the symbols with restored phases.

Propagation path state estimation section 206 estimates channel quality of subcarriers based on pilot data arranged on subcarriers. In this embodiment, a scaling factor for subcarriers is obtained as channel quality of subcarriers using reception pilot data and a pilot replica.

The channel quality information of subcarriers obtained by propagation path state estimation section 206 is feed back to ranking section 107 of multicarrier transmission apparatus 100. In practice, multicarrier transmission apparatus 100 includes a reception section (not shown) as described above and multicarrier reception apparatus 200 includes a transmission section (not shown). Channel quality information transmitted by radio from the transmission section (not shown) of multicarrier reception apparatus 200 to the reception section (not shown) of multicarrier transmission apparatus 100 is input to ranking section 107 of multicarrier transmission apparatus 100 of the radio station.

Ranking section 107 temporarily stores channel quality information of subcarriers, ranks subcarrier numbers in descending order or ascending order of channel quality and sends the ranking information to interleave pattern setting section 108. Interleave pattern setting section 108 sets an interleave pattern such that the sum of the above described rankings of the subcarriers to which the Ich components and Qch components of symbols before interleaving are assigned is equal among the respective symbols.

Interleave pattern setting section 108 will be explained more specifically. Since interleave pattern setting section 108 knows in advance to which subcarrier the Ich component of the symbol mapped by mapping section 102 is to be assigned, it calculates subcarrier number Nq to which Q component RSq of symbol RS is assigned based on the following Expression:

$$Nq \ = \ subN(M-R(Ni)) \qquad \dots\dots\dots (1)$$

where S is a mapped symbol, RS is a symbol after phase rotation processing, RSi, RSq are the Ich component and Qch component thereof respectively.

In Expression (1), Ni denotes a subcarrier number to which the Ich component is assigned, R(x) denotes ranking of channel quality of a subcarrier of subcarrier number x (scaling factor in this embodiment), subN(y) denotes a subcarrier number whose channel quality ranking is yth and M denotes the total number of ranked sub carriers. This allows the sum of the ranking of a subcarrier to which the Ich component is assigned and the ranking of a subcarrier to which the Qch component is assigned to be kept constant among symbols.

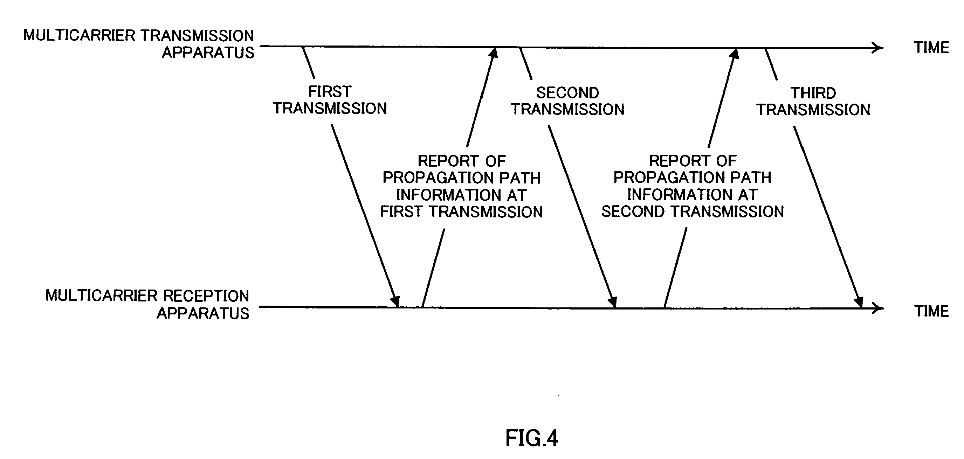

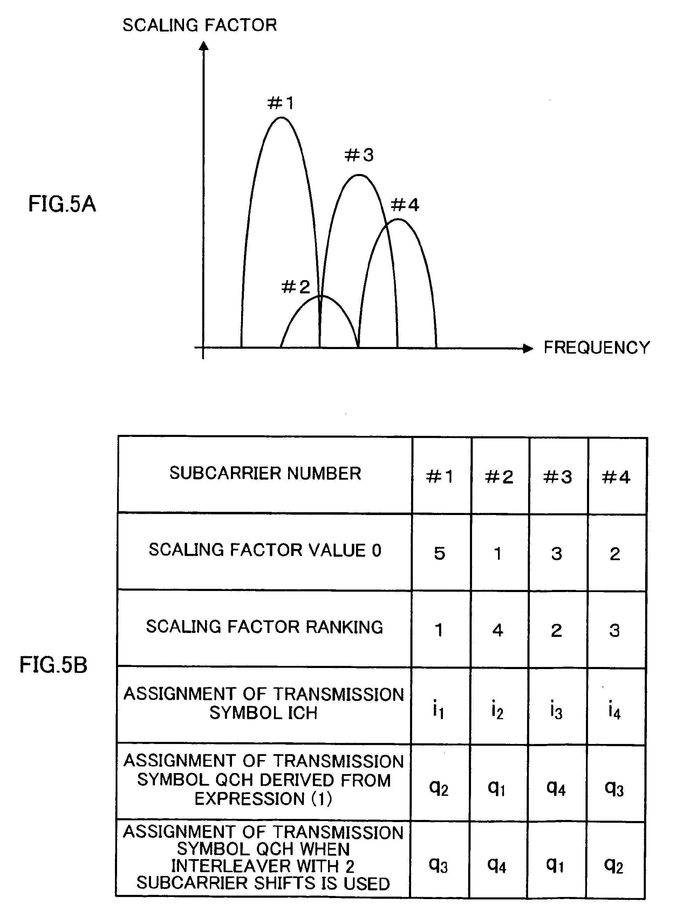

Next, the operations of multicarrier transmission apparatus 100 and multicarrier reception apparatus 200 configured as shown above will be explained using FIG.4, FIG.5A and FIG.5B. As shown in FIG.4, a first transmission is performed from multicarrier transmission apparatus 100 to multicarrier reception apparatus 200. At the time of this first transmission, propagation path information (channel quality of subcarriers) is unknown, and therefore, interleave pattern setting section 108 sets an appropriate interleave pattern for transmission. However, suppose this interleave pattern is known to multicarrier reception apparatus 200. At the first transmission, it is also possible to send only a pilot signal instead of sending transmission data.

Upon reception of the first transmission signal, multicarrier reception apparatus 200 extracts the pilot signal placed on subcarriers and propagation path state estimation section 206 compares the extracted pilot signal with the pilot replica stored beforehand and obtains propagation path information for subcarriers (channel quality information). Multicarrier reception apparatus 200 then transmits this channel quality information for subcarriers tomulticarrier transmission apparatus 100 as feedback information.

At the time of a second transmission, multicarrier transmission apparatus 100 carries out interleave processing on the Qch component using an interleave pattern according to the channel quality information for each fed back subcarrier and obtainss modulation diversity modulation symbols. Using the modulation diversity modulation symbols, multicarrier transmission apparatus 100 performs OFDM modulation processing and carries out the second transmission.

Upon reception of the second transmission signal, multicarrier reception apparatus 200 carries out modulation diversity demodulation processing on the received signal and obtains received data. At this time, since the modulation diversity modulation symbols received at the second time are created using an interleave pattern according to channel quality of subcarriers, they can obtain an effective diversity gain compared to the modulation diversity modulation symbols received at the first time and the error correction rate characteristic of the received data improves.

Likewise, multicarrier reception apparatus 200 feeds back the channel quality information of subcarriers estimated using the pilot signal when the second transmission signal is received to multicarrier transmission apparatus 100 and multicarrier transmission apparatus 100 performs modulation diversity modulation using a new interleave pattern according to the channel quality information and carries out a third transmission.

Thus, multicarrier transmission apparatus 100 and multicarrier reception apparatus 200 adaptively change an interleave pattern of modulation diversity modulation/demodulation, and can thereby assign Qch to a subcarrier of bad channel quality when Ich is assigned to a subcarrier of good channel quality and assign Qch to a subcarrier of good channel qualitywhen Ich is assigned to a subcarrier of bad channel quality and thereby obtain an effective diversity gain even if a propagation path condition changes,.

Next, the reason why an effective diversity gain can be obtained if modulation diversity modulation is performed using an interleave pattern according to channel quality of subcarriers as in the case of this embodiment will be explained using FIG.5A, FIG. 5B, FIG.6, FIG.7 and FIG.8.

FIG. 5A shows a propagation path variation of subcarriers and FIG. 5B illustrates scaling factors of subcarriers, ranking result of the scaling factor by ranking section 107, assignment of an Ich component to subcarriers, assignment of a Qch component to subcarriers through interleaving of this embodiment and assignment of a Qch component to subcarriers through conventional interleaving (interleave with two subcarriers shifts) when subcarriers changes as shown in FIG.5A.

As is evident from FIG. 5B, the sum of scaling factors of mutually corresponding Ich component and Qch component is kept constant in the interleaving of this embodiment. For example, the ranking of the scaling factor of I component $i_1$ of symbol S1 is 1 and the ranking of Q component $q_1$ is 4, and therefore the sum is 5. On the other hand, the ranking of the scaling factor of I component $i_2$ of symbol S2 is 4 and the ranking of Q component $q_2$ is 1, and therefore the sum is 5. In this way, an average modulation diversity gain can be obtained with all symbols, and therefore it is possible to eliminate symbols having extremely bad error correction rate characteristics.

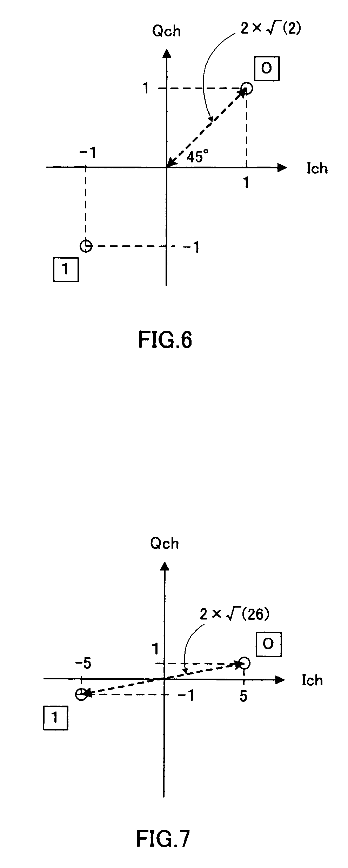

FIG.6 shows a signal point position when mapping section 102 carries out BPSK (Binariphase Phase Shift Keying) processing and phase rotation section 103 carries out phase rotation processing by 45°. Furthermore, FIG.7 shows a signal point position when the symbol in FIG.6 is subjected to modulation diversity modulation processing whereby the Ich component is assigned to subcarrier #1 and the Qch component is assigned to subcarrier #2 in the configuration of this embodiment, transmitted by radio, received and demapped. The distance between signal points D in this case can be calculated by the following expression:

$$D = 2\sqrt{Ci^2 + Cq^2} \quad \text{.........} \ (2)$$

where, Ci in Expression (2) is a scaling factor of the subcarrier to which Ich is assigned and Cq is a scaling factor of the subcarrier to which Qch is assigned.

As an example, distances between signal points $D_1$ to $D_4$ during demapping is calculated when 4 symbols $S_1$ to $S_4$ obtained by mapping as shown in FIG. 6 and expressed by the following expression are transmitted through the propagation paths shown in FIG.5A.

$$\begin{aligned} S_1 &= i_1 + jq_1 \\ S_2 &= i_2 + jq_2 \\ S_3 &= i_3 + jq_3 \\ S_4 &= i_4 + jq_4 \end{aligned} \quad \text{.........} \ (3)$$

Distances between signal points $D_1$ to $D_4$ during demapping of symbols $S_1$ to $S_4$ when interleaving is performed in the configuration of this embodiment are expressed by the following expression:

$$\begin{aligned} D_1 &= 2\sqrt{5^2 + 1^2} = 2\sqrt{26} \\ D_2 &= 2\sqrt{1^2 + 5^2} = 2\sqrt{26} \\ D_3 &= 2\sqrt{3^2 + 2^2} = 2\sqrt{13} \\ D_4 &= 2\sqrt{2^2 + 3^2} = 2\sqrt{13} \end{aligned} \quad \text{.........} \ (4)$$

On the other hand, distances between signal points $D_1$ to $D_4$ during demapping of symbols $S_1$ to $S_4$ when an interleaver with 2 subcarrier shifts is used as a conventional example are expressed by the following expression:

$$\begin{aligned} D_1 &= 2\sqrt{5^2 + 3^2} = 2\sqrt{34} \\ D_2 &= 2\sqrt{1^2 + 2^2} = 2\sqrt{5} \\ D_3 &= 2\sqrt{3^2 + 5^2} = 2\sqrt{34} \\ D_4 &= 2\sqrt{2^2 + 1^2} = 2\sqrt{5} \end{aligned} \quad \text{.........} \ (5)$$

As is clear from a comparison between Expression (4) and Expression (5), it is appreciated that using different interleave patterns according to channel quality of subcarriers as in the case of this embodiment makes it possible to secure distances between signal points averagely more than using a fixed interleave pattern.

Next, it is assumed that Gaussian noise of average noise power N is added to all subcarriers, average error rate Pe of 4 symbols when interleaving is performed in the configuration of this embodiment is expressed by the following expression. erfc in the following expression denotes a Gaussian error function.

$$Pe = \frac{1}{4}\left(\frac{1}{2}erfc\left(\frac{D_1}{\sqrt{2N}}\right) + \frac{1}{2}erfc\left(\frac{D_2}{\sqrt{2N}}\right) + \frac{1}{2}erfc\left(\frac{D_3}{\sqrt{2N}}\right) + \frac{1}{2}erfc\left(\frac{D_4}{\sqrt{2N}}\right)\right) \quad \cdots\cdots (6)$$

$$= \frac{1}{4}\left(erfc\left(\frac{2\sqrt{26}}{\sqrt{2N}}\right) + erfc\left(\frac{2\sqrt{13}}{\sqrt{2N}}\right)\right)$$

$$= \frac{1}{4}\left(erfc\left(\frac{\sqrt{52}}{\sqrt{N}}\right) + erfc\left(\frac{\sqrt{26}}{\sqrt{N}}\right)\right)$$

On the other hand, average error rate Pe of 4 symbols when an interleaver with 2 subcarrier shifts is used as a conventional example is expressed by the following expression:

$$Pe = \frac{1}{4}\left(\frac{1}{2}erfc\left(\frac{D_1}{\sqrt{2N}}\right) + \frac{1}{2}erfc\left(\frac{D_2}{\sqrt{2N}}\right) + \frac{1}{2}erfc\left(\frac{D_3}{\sqrt{2N}}\right) + \frac{1}{2}erfc\left(\frac{D_4}{\sqrt{2N}}\right)\right) \quad \cdots\cdots (7)$$

$$= \frac{1}{4}\left(erfc\left(\frac{2\sqrt{34}}{\sqrt{2N}}\right) + erfc\left(\frac{2\sqrt{5}}{\sqrt{2N}}\right)\right)$$

$$= \frac{1}{4}\left(erfc\left(\frac{\sqrt{68}}{\sqrt{N}}\right) + erfc\left(\frac{\sqrt{10}}{\sqrt{N}}\right)\right)$$

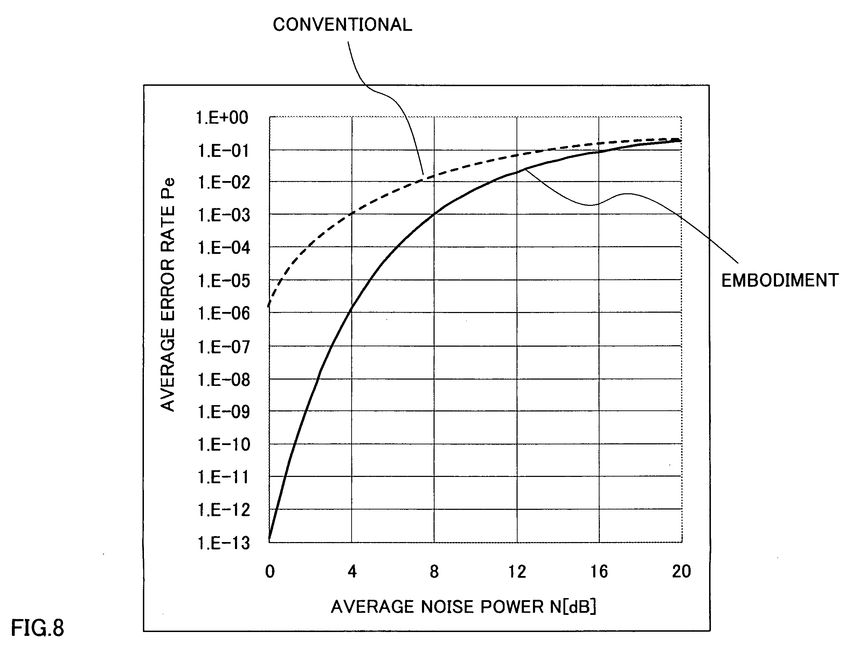

FIG. 8 shows average error rate Pe in Expression (6) and Expression (7) when average noise power N as aparameter is changed between 0 and 20 dB. From FIG.8, it is appreciated that the average error rate of this embodiment (solid line in the figure) drastically improves compared to the conventional example (dotted line in the figure).

Thus, this embodiment adaptively changes an interleave pattern of modulation diversity modulation according to channel quality of subcarriers, and therefore it is possible to obtain diversity gains uniformly for all symbols and improve the error correction rate characteristic.

(Embodiment 2)

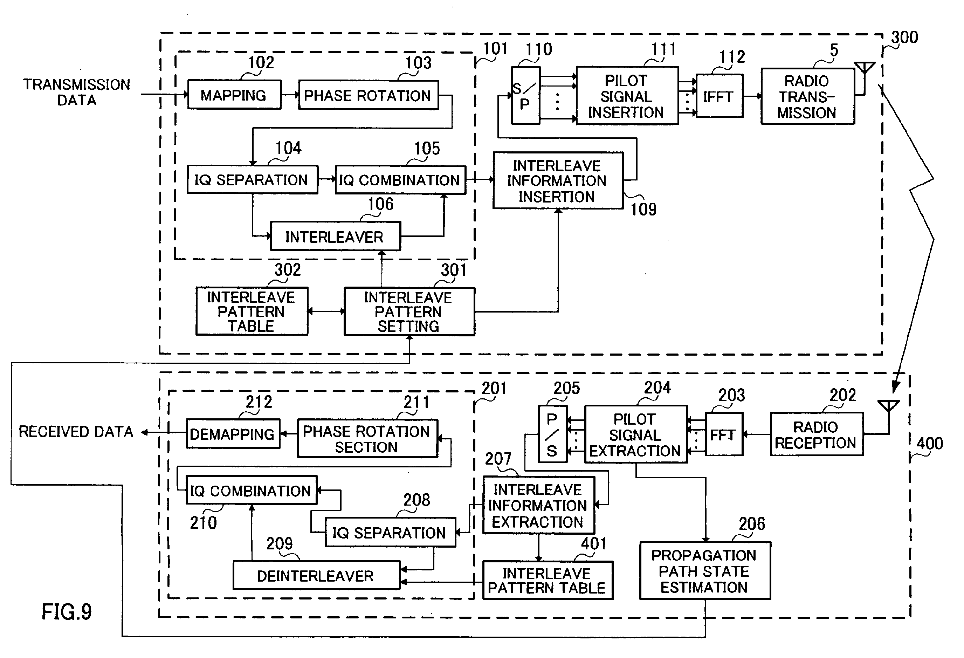

FIG.9 in which parts corresponding to those in FIG. 3 are shown with the same reference numerals assigned shows the configurations of multicarrier transmission apparatus 300 and multicarrier reception apparatus 400 that receives and demodulates a signal from multicarrier transmission apparatus 300 according to Embodiment 2.

Multicarrier transmission apparatus 300 has a configuration similar to that of multicarrier transmission apparatus 100 according to Embodiment 1 except in that it has a different configuration of interleave pattern setting section 301 and includes interleave pattern table 302. Furthermore, multicarrier reception apparatus 400 has a configuration similar to that of multicarrier reception apparatus 200 according to Embodiment 1 except in that it includes interleave pattern table 401.

Here, interleave pattern table 302 of multicarrier transmission apparatus 300 stores a plurality of interleavepatterns. Interleave pattern setting section 301 sequentially reads a plurality of interleave patterns stored in interleave pattern table 302 and performs a simulation using interleave patterns and channel quality of subcarriers and thereby selects an interleave pattern which obtains an optimum modulation diversity effect from among the plurality of interleave patterns.

Then, interleave pattern setting section 301 transmits the selected interleave pattern to interleaver 106. Interleaver 106 carries out interleave processing using set interleave pattern 106. Furthermore, interleave pattern information set by interleave pattern setting section 301 is inserted into a transmission signal by interleave information insertion section 109 and sent to multicarrier reception apparatus 400.

Interleave pattern table 401 of multicarrier reception apparatus 400 stores interleave patterns similar to the interleave patterns stored in interleave pattern table 302 of multicarrier transmission apparatus 300. Multicarrier reception apparatus 400 reads the same interleave pattern as the interleave pattern used on the transmitting side from interleave pattern table 401 based on the interleave pattern information extracted at interleave information extraction section 207 and sends the interleave pattern to deinterleaver 209. In this way, deinterleaver 209 restores Qch components to their original array.

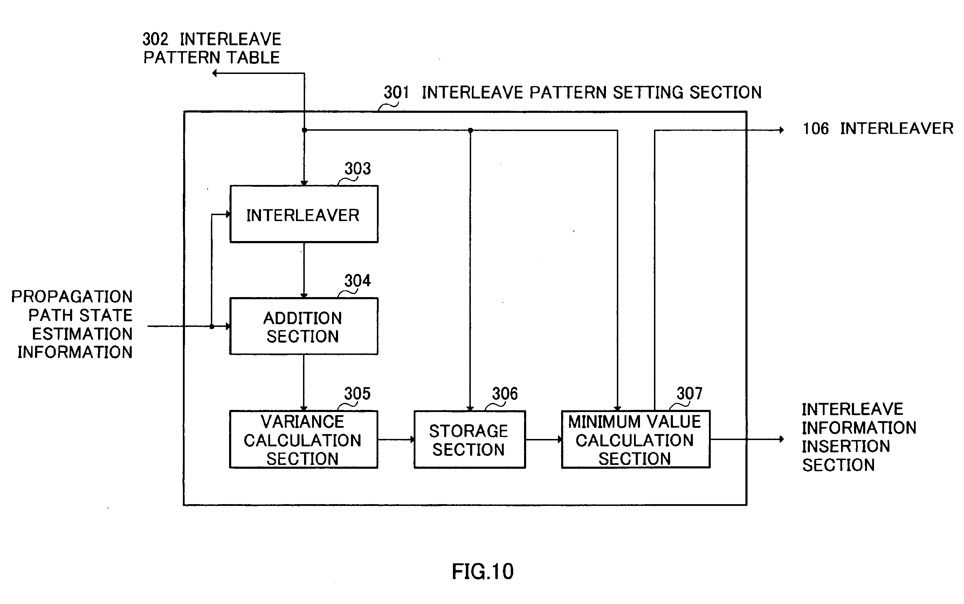

Here, the configuration of interleave pattern setting section 301 of this embodiment is shown in FIG.10. Interleaver 303 reads an interleave pattern stored in interleave pattern table 302 and performs interleaving in the interleave pattern according to which propagation path state estimation information (that is, channel quality of subcarriers) is read.

In addition section 304, channel quality of interleaved subcarriers and channel quality of non-interleaved subcarriers are input and, by adding up these channel qualities in subcarrier units, a value is obtained that is corresponding to summing of Qch components and Ich components in symbol units that are affected by propagation path variations when transmitted by radio in the current propagation path.

This will be explained more specifically. For example, when the number of subcarriers is 4, suppose S= (S1,S2,S3,S4) is input as propagation path state estimation information (channel quality of subcarriers). Suppose an output of S'=(S2,S4,S3,S1) is obtained as a result of using an interleave pattern from interleaver 303. At this time, above described S predicts reception power of the Ich component and above described S' predicts reception power of the Qch component. Addition section 304 then performs a vector addition of above described S and S' as shown in the following expression and calculates an absolute value thereof.

$$S'' = |S + jS'|$$

$$= \sqrt{(S1^2 + S2^2)}, \sqrt{(S2^2 + S4^2)}, \sqrt{(S3^2 + S3^2)}, \sqrt{(S4^2 + S1^2)} \quad \ldots\ldots \quad (8)$$

Variance calculation section 305 calculates variance values of all added elements. More specifically, variances of the four signals of Expression (8) are calculated. The calculated variance values and interleave pattern numbers at that moment are stored in storage section 306. That is, storage section 306 stores variance values when interleave patterns stored in interleave pattern table 302 is used, in association with the corresponding interleave pattern number. Minimum value calculation section 307 calculates a minimum variance value out of variance values stored in storage section 306 and sends the interleave pattern number corresponding to the variance value to interleaver 106 and interleave information insertion section 109.

Next, the operation of this embodiment will be explained. Interleaver 303 reads an interleave pattern of interleave pattern of number 1 from interleave pattern table 302 first. Interleaver 303 interleaves channel quality of subcarriers in the read interleave pattern and sends the interleave result to addition section 304. Addition section 304 adds up channel quality of subcarriers and interleaved channel quality element by element (subcarrier by subcarrier). Here, wheb N subcarriers are assumed to be used, an addition results are also N. Variance calculation section 305 calculates variance values of N addition results. Storage section 306 stores the variance values in association with the interleave pattern numbers used to calculate the variance values. Interleave pattern setting section 301 carries out this processing on all interleave patterns by sequentially using interleave patterns stored in interleave pattern table 302.

Interleave pattern setting section 301 finally calculates the minimum variance value out of variance values stored in storage section 306 by minimum value calculation section 307 and selects an interleave pattern number corresponding to the variance value.

By so doing, it is possible to select an interleave pattern whereby the sum of channel qualities (e.g., scaling factors) of subcarriers to which Ich components are expected to be assigned and channel qualities of subcarriers to which Qch components after being interleaved are expected to be assigned fluctuates little among symbols. As a result, an average modulation diversity gain can be obtained among all symbols, and therefore symbols having extremely bad error correction rate characteristics can be eliminated. More specifically, it is possible to select an interleave pattern with a high probability of assigning Qch components to subcarriers of bad channel quality when Ich components are assigned to subcarriers of good channel quality and assigning Qch to subcarriers of good channel quality when Ich components are assigned to subcarriers of bad channel quality.

Thus, this embodiment provides interleave pattern table 302 storing a plurality of interleave patterns, performs a simulation using stored interleave patterns and channel quality of subcarriers and can thereby select an interleave pattern whereby an optimum modulation diversity effect can be obtained from among the plurality of interleave patterns, and therefore, it is possible to obtain an effective diversity gain and improve the error correction rate characteristic.

Furthermore, since the receiving side is provided with interleave pattern table 401 storing the same interleave patterns as those of interleave pattern table 302 on the transmitting side, it is possible for the receiving side to perform deinterleave processing corresponding to an interleave pattern on the transmitting side by only reporting an interleave pattern number used on the transmitting side and thereby reduce the amount of interleave information to be reported from the transmitter to the receiver.

(Embodiment 3)

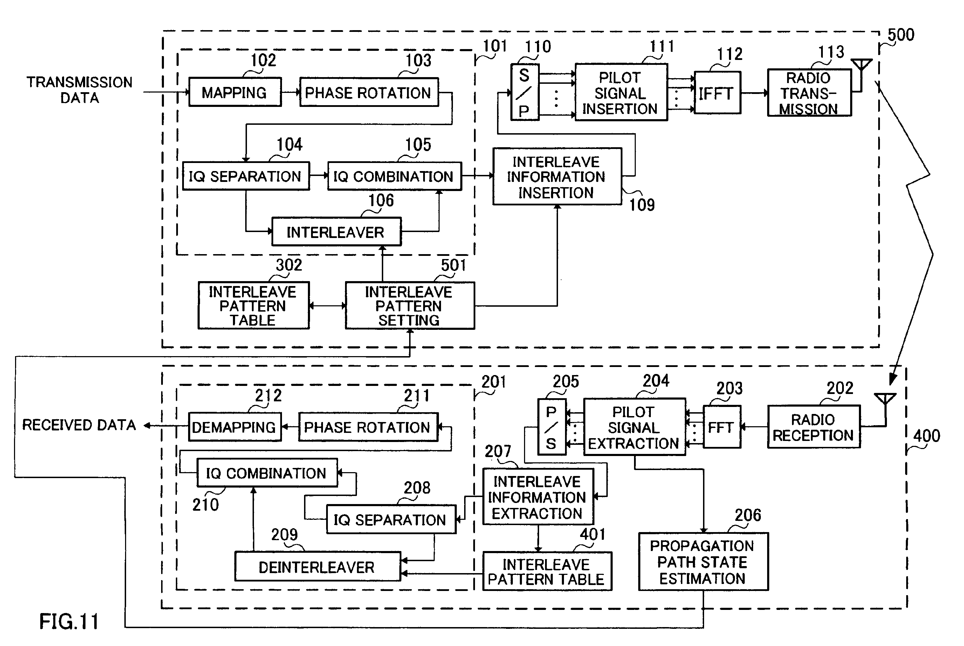

FIG.11 inwhichparts corresponding to those in FIG.9 are shown with the same reference numerals assigned shows the configuration of multicarrier transmission apparatus 500 and multicarrier reception apparatus 400 that receives and demodulates a signal from multicarrier transmission apparatus 500 according to Embodiment 3.

Multicarrier transmission apparatus 500 has a configuration similar to that of multicarrier transmission apparatus 300 of Embodiment 2 except in that the configuration of interleave pattern setting section 501 is different. Furthermore, multicarrier reception apparatus 400 has a configuration similar to that of multicarrier reception apparatus 400 explained in Embodiment 2.

Interleave pattern setting section 501 is similar to interleave pattern setting section 301 in Embodiment 2 in that it sequentially reads a plurality of interleave patterns stored in interleave pattern table 302, performs a simulation using interleave patterns and channel quality of subcarriers and thereby selects an interleave pattern whereby an optimum modulation diversity effect can be obtained from the plurality of interleave patterns. However, interleave pattern setting section 501 has a different configuration from interleave pattern setting section 301.

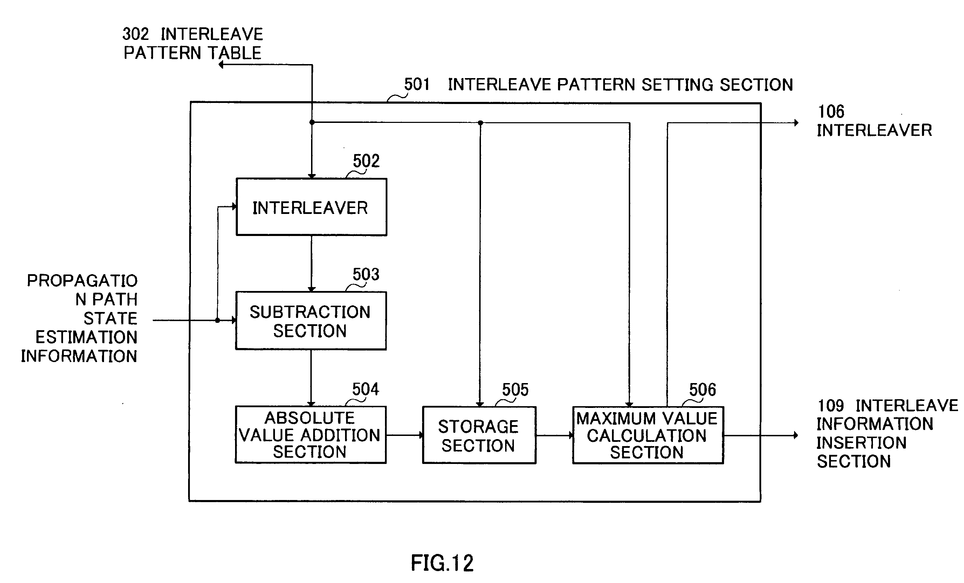

FIG. 12 shows the configurationof interleave pattern setting section 501 of this embodiment. Interleaver 502 reads an interleave pattern stored in interleave pattern table 302 and interleaves propagation path state estimation information (that is, channel quality of subcarriers) in the read interleave pattern.

Subtraction section 503 receives channel quality of interleaved subcarriers and channel quality of non-interleaved subcarriers and subtraction section 503 performs subtractions between the channel qualities in subcarrier units, thereby interleaves Qch components in the read interleave pattern and obtains values corresponding to subtractions in symbol units between the Qch components and Ich components which have been affected by variations in the propagation path during radio transmission through the current propagation path.

Absolute value addition section 504 calculates absolute values of all subtracted elements and calculates an addition value thereof. The addition values of absolute values calculated and the interleave pattern number at that moment are stored in storage section 505. That is, storage section 505 stores addition values of absolute values when interleave patterns stored in interleave pattern table 302 is used in association with the corresponding interleave pattern number. Maximum value calculation section 506 calculates a maximum value out of the addition values of absolute values stored in storage section 505 and sends an interleave pattern number corresponding to the addition value of absolute values to interleaver 106 and interleave information insertion section 109.

Next, the operation of this embodiment will be explained.

First, interleaver 502 reads an interleave pattern of interleave pattern number 1 from interleave pattern table 302. Interleaver 502 interleaves channel quality of subcarriers in the read interleave pattern and sends the interleave result to subtraction section 503. Subtraction section 503 performs subtractions in element units (in subcarrier units) between channel qualities of subcarriers and interleaved channel qualities. Here, when N subcarriers are assumed to be used, subtraction results are also N. Absolute value addition section 504 calculates a total addition value after taking the absolute values of N subtraction results. Storage section 505 stores the addition value of absolute values in association with the interleave pattern number used to calculate the addition value of absolute values. Interleave pattern setting section 501 carries out this processing repeatedly on all interleave patterns by sequentially using the interleave patterns stored in interleave pattern table 302.

Interleave pattern setting section 501 finally calculates the minimum value out of the addition values of absolute values stored in storage section 505 by maximum value calculation section 506 and selects an interleave pattern number corresponding to that addition value of absolute values.

By so doing, it is possible to select an interleave pattern whereby the differences between channel qualities (e.g., scaling factors) of subcarriers to which Ich components are expected to be assigned and channel qualities of subcarriers to which Qch components after being interleaved are expected to be assigned increase averagely. As a result, large modulation diversity gains can be obtained averagely for all symbols, and therefore symbols having extremely bad error correction rate characteristics can be eliminated. More specifically, it is possible to select an interleave pattern with a high probability of assigning Qch components to subcarriers of bad channel quality when Ich components are assigned to subcarriers of good channel quality and assigning Qch to subcarriers of good channel quality when Ich components are assigned to subcarriers of bad channel quality.

Thus, according to this embodiment, interleave pattern table 302 storing a plurality of interleave patterns is provided, a simulation using stored interleave patterns and channel quality of subcarriers is performed and thereby an interleave pattern whereby an optimum modulation diversity effect can be obtained from among the plurality of interleave patterns can be selected, and therefore, it is possible to obtain an effective diversity gain and improve the error correction rate characteristic.

Furthermore, since the receiving side is provided with interleave pattern table 401 storing the same interleave patterns as those of interleave pattern table 302 on the transmitting side, it is possible for the receiving side to perform deinterleave processing corresponding to an interleave pattern on the transmitting side by only reporting an interleave pattern number used on the transmitting side and thereby reduce the amount of interleave information to be reported from the transmitter to the receiver.

(Embodiment 4)

This embodiment proposes a method of reducing channel quality information aboutinformation about subcarriers (scaling factor and SNR or the like) to be reported from a receiver to a transmitter. In above described Embodiments 1 to 3, determining an interleave pattern at the transmitter (multicarrier transmission apparatus) requires the receiver (multicarrier reception apparatus) to report channel quality of subcarriers. It is preferable that this feedback information is preferably small from the standpoint of radio resources. Thus, this embodiment proposes several methods of reducing the feedback information. Note that in the following examples, cases where SNR is used as channel quality of subcarriers will be explained.

(1) Method of reducing amount of data 1

SNRs between adjacent subcarriers generally have a high level of correlativity. Therefore, if a subcarrier group is created and one piece of channel quality information (e.g., SNR) is sent to the subcarrier group as feedback information, it is possible to effectively reduce the amount of feedback data without deteriorating information about subcarriers so much. For example, when a communication is in progress using 512 subcarriers, if 16 subcarriers are assumed to form one subcarrier group, it require only 48 (512÷16=48) SNRs to be fed back. Here, when one piece of channel quality information is fed back from subcarrier groups, it is possible to consider using, for example, an average SNR of the subcarriers within the group.

However, since the correlativity between adjacent subcarriers depends on a delay spread, when the delay spread is large, the correlativity is low and when the delay spread is small, the correlativity is high. Considering this fact, it is further preferable not to fix the number of subcarriers per subcarrier group and change it depending on a delay spread because it is possible to thereby report more accurate channel quality (SNR) while suppressing the amount of feedback data. For example, when a delay spread is large, the correlativity between adjacent subcarriers is small, and therefore the number of subcarriers in a subcarrier group is decreased. On the other hand, when the delay spread is small, the correlativity between adjacent subcarriers is high, and therefore the number of subcarriers in the subcarrier group is increased.

Here, the explanations have been so far focused on the case where SNRs are sent as channel quality information, but when rankings of subcarriers are sent, it is possible to determine rankings after calculating one SNR per subcarrier group and perform feedback transmission in the same way.

(2) Method of reducing amount of data 2

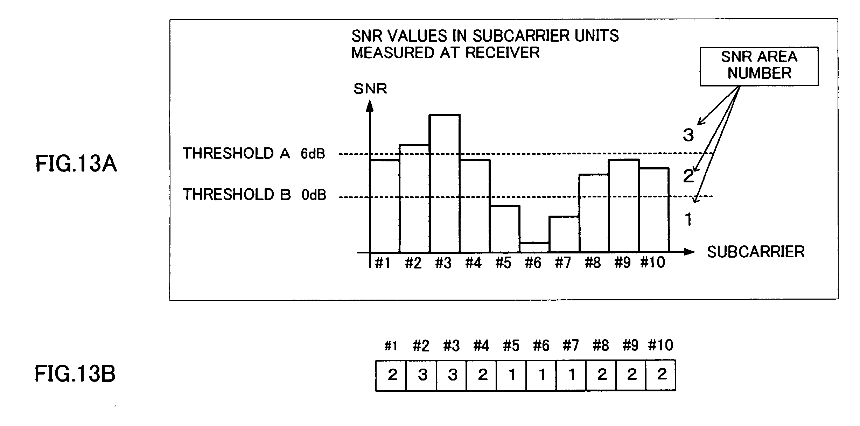

When SNR values are reported in subcarrier units, SNRs may be categorized into a number of layers (classes) and those layers may be reported. For example, as shown in FIG.13A, SNR values of respective subcarriers are categorized using two threshold SNR values (threshold A, threshold B). Instead of the SNR values of the respective subcarriers, area numbers classified as shown in FIG.13B are reported to a transmitter as feedback information.

This can reduce the amount of feedback information compared to the case where SNR values of respective subcarriers are directly transmitted to the transmitter as feedback information.

(3) Method of reducing amount of data 3

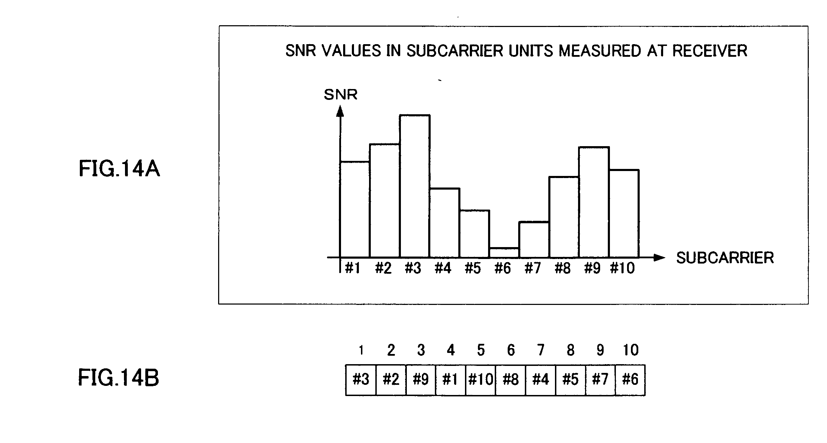

When feedback data is reported, ranking orders of SNRs are reported instead of measured SNR values of respective subcarriers. For example, when SNR values of respective subcarriers measured at a receiver are as shown in FIG.14A, subcarrier numbers in descending order of channel conditions are reported as feedback information as shown in FIG.14B.

Furthermore, when SNR ranking orders are reported in this way, subcarrier numbers of subcarriers whose SNR values are lower than a threshold may not be included in the feedback information. By so doing, a multicarrier transmitter (downlink transmitter) recognizes the subcarriers whose numbers have not been reported and does not assign any data to the subcarriers, and can thereby avoid data from being assigned to subcarriers having very low channel quality and prevent unnecessary data transmission. As a result, it is possible to reduce unnecessary transmit power.

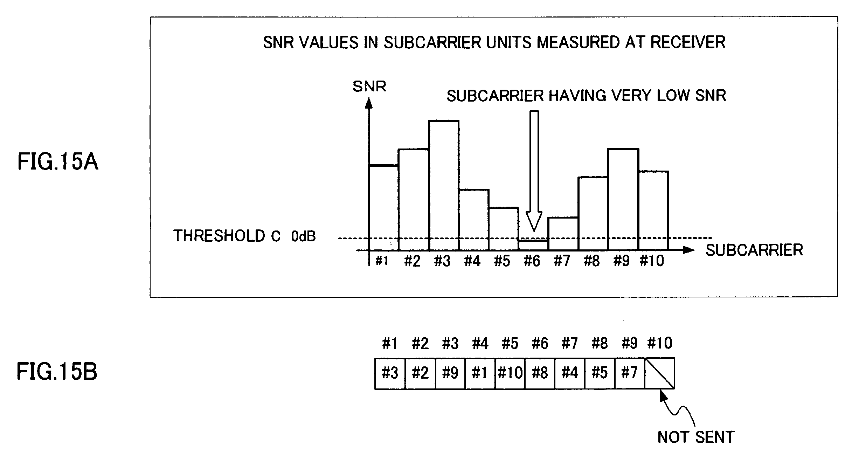

For example, when SNR values of respective subcarriers measured by the receiver are as shown in FIG.15A, the subcarrier number of subcarrier #4 whose SNR value is lower than threshold C may not be reported as feedback information as shown in FIG.15B. The multicarrier transmitter that has acquired the feedback information sets an interleave pattern by the interleave pattern setting section in such a way that no data is assigned to the subcarrier of subcarrier number #6 which is not included in the feedback information.

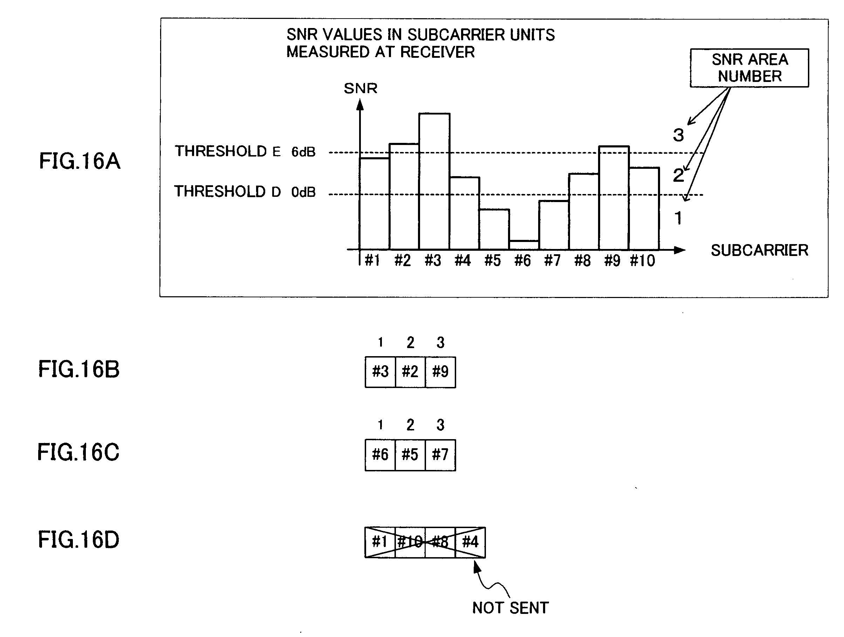

Furthermore, when SNR rankings are reported, it is also possible to classify the SNR values as shown in FIG. 16A to FIG. 16D, not to include subcarriers having medium level of SNRs in the feedback information and feed back subcarrier numbers in descending order of SNR values as feedback information 1 and feed back subcarrier numbers in ascending order of SNR values as feedback information 2. In the examples in FIG.16A to FIG.16D, SNR values are classified into three classes using threshold D and threshold E (FIG.16A), subcarrier #1, #10, #8, #4 whose SNRs are medium level are not included in the feedback information (FIG. 16D), subcarrier numbers #3, #2, #9 in descending order of SNRs are fed back as feedback information 1 (FIG.16B) and subcarrier numbers in ascending order of SNRs are fed back as feedback information 2 (FIG.16C).

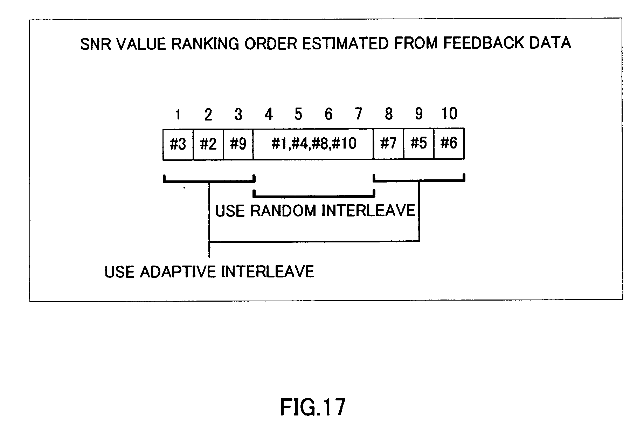

The multicarrier transmitter that receives this feedback information acquires subcarrier numbers in descending order of SNRs from feedback information 1 as shown in FIG.17 and acquires subcarrier numbers in ascending order of SNRs from feedback information 2, and the interleave pattern setting section sets an adaptive interleave pattern corresponding to channel quality as the interleave pattern of subcarriers to which Ich and Qch are assigned as explained in Embodiment 1 for these subcarriers (that is, subcarriers whose channel quality is high or low) and thereby carries out adaptive interleaving according to channel quality of subcarriers. The multicarrier transmitter carries out random interleaving for other subcarrier numbers whose SNR values are medium level by setting a random interleave pattern through the interleave pattern setting section.

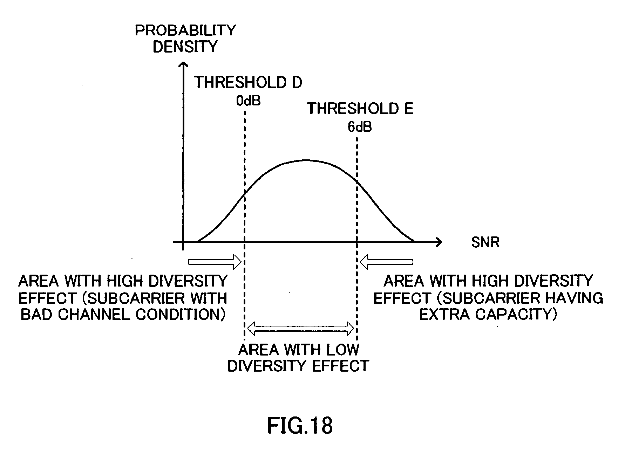

Here, threshold D and threshold E are preferably set to SNR values (0 dB and 6 dB in this case) on a boundary when the effects of diversity gains are divided into a high area and low area as shown in FIG.18 (shows SNR values on the horizontal axis and probability densities of SNR values of respective subcarriers on the vertical axis). By so doing, it is possible to reduce the amount of feedback data for the intermediate SNR area where diversity effects are not obtained so much even if feedback is performed (that is, adaptive interleaving is performed).

Furthermore, when, for example, control information that the amount of feedback data should be reduced is received from the multicarrier transmitter, above described threshold D is decremented by 1 dB and threshold E is incremented by 1 dB. By so doing, it is possible to perform feedback for only the areas where effects of diversity gains are high. On the contrary, when control information that the amount of feedback data can be increased is received, above described threshold D is incremented by 1 dB and threshold E is decremented by 1 dB. By so doing, it is possible to increase more effective feedback data and as a result, it is possible to design an adaptive interleaver using more feedback data.

(4) Method of reducing feedback count

When a plurality of temporally intermittent frames (packets)aretransmitted,thepresentinvention proposes to change transmission intervals of feedback data according to a Doppler frequency instead of transmitting feedback data in frame units.

A temporal variation of SNR values is proportional to a Doppler frequency (relative moving speed between a receiver and a transmitter) . That is, when the Doppler frequency is low, a temporal variation of SNR values is estimated to be small and when the Doppler frequency is high, a temporal variation of SNR values is estimated to be large. In consideration of this, when the Doppler frequency is low, the same interleave pattern is used without transmitting feedback data for a period of several frames and transmit, and when the Doppler frequency is high, feedback data for every frame is transmitted and the interleave pattern is updated.

Here, a case where SNRs are sent is explained, but the present invention is likewise applicable to a case where SNR rankings of subcarriers or interleaver table numbers are reported.

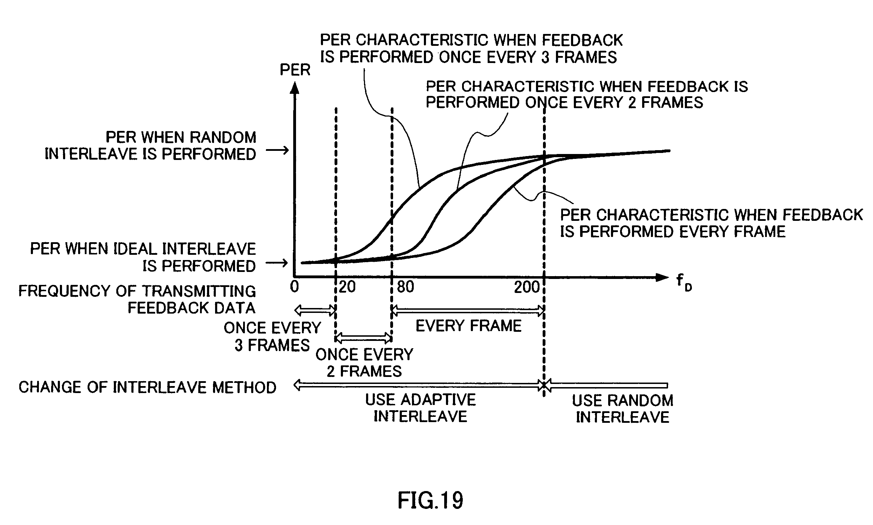

FIG.19 shows an example of the frequency of transmitting feedback data and switching between the interleave methods according to this embodiment. As shown in the figure, at a Doppler frequency fD of 20 Hz or below, changing the frequency of transmitting feedback data produces substantially no characteristic difference (PER (Packet Error Rate) in the figure). Therefore, in such a case, the amount of feedback data is reduced by reducing the frequency of transmitting feedback data (once every three frames in the figure). On the other hand, when Doppler frequency fD is 20 Hz to 80 Hz, the characteristic does not deteriorate even with feedback data once every 2 frames, and therefore feedback data is transmitted once every 2 frames. Furthermore, in an area of Doppler frequency fD of 200 Hz or higher, even when feedback data is sent every frame, almost no effect of characteristic improvement can be expected compared to the case where random interleave is performed. Therefore, in such a case, an instruction to stop transmitting SNR values as feedback data, carry out modulation diversity modulation using random interleave instead of adaptive interleave is reported to the multicarrier transmitter.

(Embodiment 5)

This embodiment will explain a configuration in a case where the present invention is applied to an OFDM system whereby the same symbol is transmitted a plurality of times repeatedly (hereinafter referred to as "repetition OFDM") will be explained.

First, the repetition OFDM will be explained briefly.

Transmitting the same symbol repeatedly makes the transmission rate of repetition OFDM low, but when, for example, a downlink reception terminal is located near a cell edge where an SNR value is very bad, it is proposed as an effective system to transmit information reliably.

Symbol repetition is designed to transmit symbols such as QPSK and BPSK repeatedly within the same frame, repeatedly combine the symbols at the receiving side and make it possible to obtain a diversity effect.

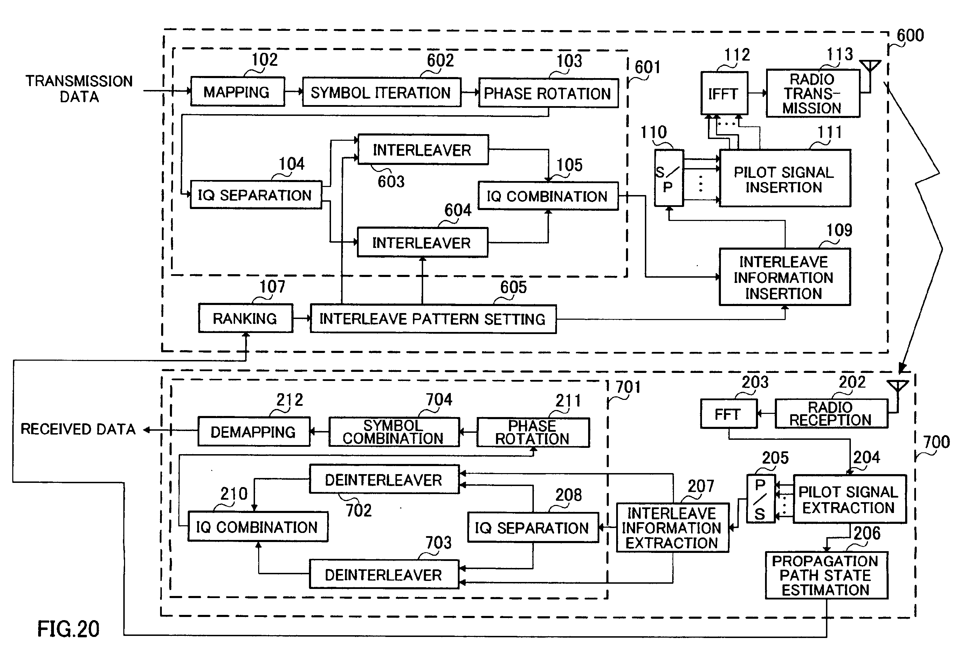

FIG.20 inwhichparts corresponding to those in FIG.3 are shown with the same reference numerals assigned shows the configuration of multicarrier transmission apparatus 600 and multicarrier reception apparatus 700 that receives and demodulates signals from multicarrier transmission apparatus 600 according to this embodiment.

Multicarrier transmission apparatus 600 is constructed in a configuration similar to that of multicarrier transmission apparatus 100 according to Embodiment 1 except in that modulation diversity modulation section 601 is provided with symbol iteration section 602 and Ich, Qch interleavers 603, 604 and that the configuration of interleaver pattern setting section 605 is different. Symbol iteration section 602 outputs symbols which are sequentially input frommapping section 102 repeatedly a plurality of times. That is, symbol iteration section 602 forms a plurality of the same symbols and outputs them.

Multicarrier reception apparatus 700 is constructed in a configuration similar to that of multicarrier reception apparatus 200 according to Embodiment 1 except in that modulation diversity demodulation section 701 is provided with symbol combination section 704 that combines and outputs the same symbols corresponding to the same iteration count output from phase rotation section 211 and Ich, Qch deinterleavers 702, 703.

Next, the operations of multicarrier transmission apparatus 600 and multicarrier reception apparatus 700 will be explained especially focused on the setting operation of an interleave pattern.

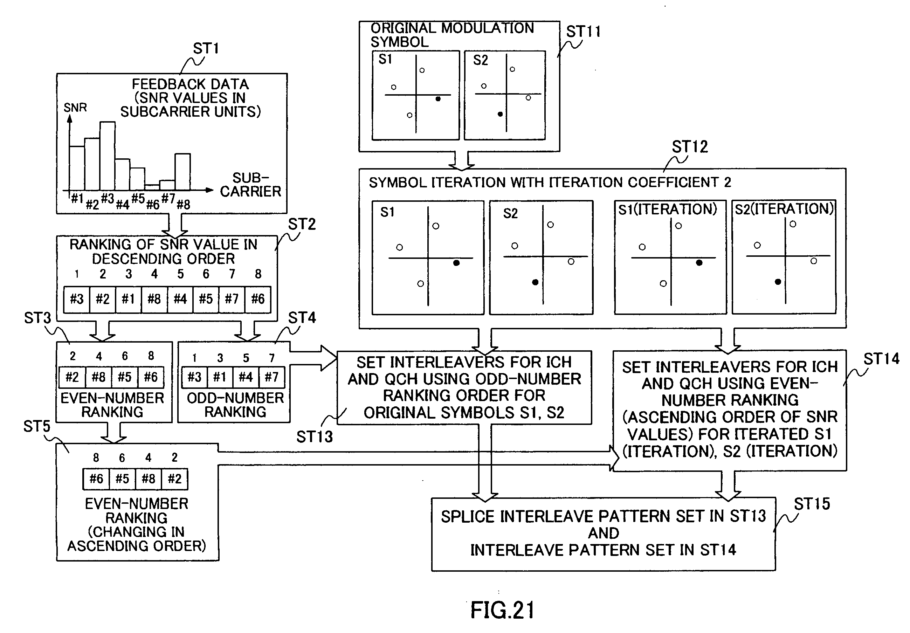

First, the operation of multicarrier transmission apparatus 600 will be explained using FIG.21. Multicarrier transmission apparatus 600 performs the following operation to set interleave patterns of respective interleavers 603, 604.

(1) Ranking section 107 receives feedback data (SNR values in subcarrier units) (ST1) and ranks them (ST2).

(2) Interleave pattern setting section 605 divides SNR value rankings into odd-number rankings and even-number rankings (ST3, ST4).

(3) Even-number ranking is changed upside down (ST5).

(4) Symbol iteration section 602 forms iteration symbols . Here, when an iteration count (iteration coefficient) is 2, making two copies of original symbols S1 and S2 (ST11) forms iteration symbols as shown in ST12.

(5) In ST13, an interleave pattern is set using odd-number ranking for original symbols S1 and S2 as in the case of Embodiment 1 such that the sum of the odd-number rankings of subcarriers to which Ich components are assigned and the odd-number rankings of subcarriers to which Qch components are assigned is constant between symbols S1 and S2. More specifically, interleave patterns of Ich, Qch interleavers 603, 604 are set so that S1 (Ich) is assigned to subcarrier #3, S2 (Ich) is assigned to subcarrier #1, S1(Qch) is assigned to subcarrier #7 and S2 (Qch) is assigned to subcarrier #4.

(6) In ST14, an interleave pattern is set using even-number ranking (ascending order of SNR values) for iteration symbols S1 and S2 as in the case of Embodiment 1 such that the sum of the even-number rankings of subcarriers to which Ich components are assigned and the even-number rankings of subcarriers to which Qch components are assigned is constant between iteration symbols S1, S2. More specifically, interleave patterns of Ich, Qch interleavers 603, 604 are set so that S1 (Ich) is assigned to subcarrier #6, S2 (Ich) is assigned to subcarrier #5, S1 (Qch) is assigned to subcarrier #2 and S2(Qch) is assigned to subcarrier #8.

(7) In ST15, a final Ich interleave pattern and Qch interleave pattern are set by splicing the interleave pattern set in ST13 and the interleave pattern set in ST14 with each Ich and Qch. More specifically, the interleave pattern for original symbol Ich created in ST13 and the interleave pattern for iteration symbol Ich created in ST14 are spliced together into one Ich interleave pattern. Likewise, the interleave pattern for original symbol Qch created in ST13 and the interleave pattern for iteration symbol Qch created in ST14 are spliced together into one Qch interleave pattern.

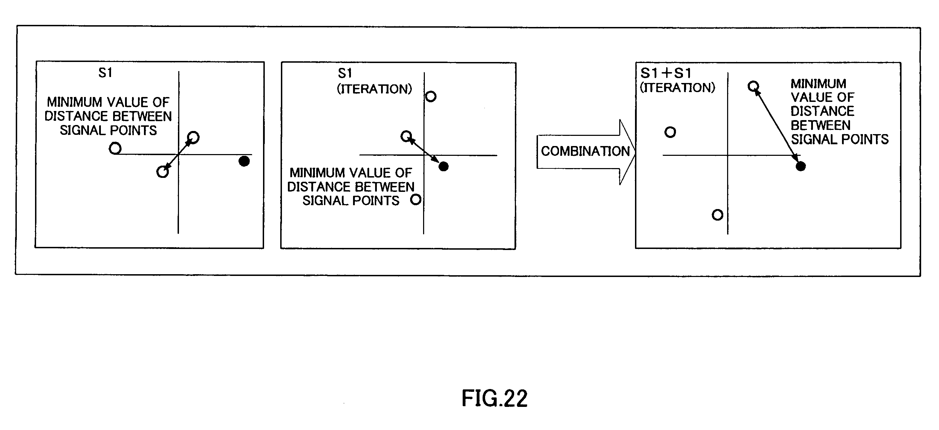

By setting such interleave patterns, symbol combination section 704 of multicarrier reception apparatus 700 obtains reception constellations as shown in FIG.22. In these constellations, a distance between signal points is kept wide especially in the constellation after the combination, and therefore the minimum value of the distance between signal points which has a maximum influence on the BER characteristic increases and the BER characteristic improves.

**EP 1 635 495 A1**

This embodiment explains the case where interleave pattern of original symbols S1, S2 and on their iteration symbols are uniquely determined based on the channel quality rankings of subcarriers, but the present invention is not limited to this and it is also possible to set an adaptive interleave pattern through an advance simulation at the transmitter to determine to which subcarriers Ich and Qch of the original symbols and iteration symbols should be assigned for transmission so that the minimum value of the distance between signal points of the constellation after the combination increases averagely at the receiver.

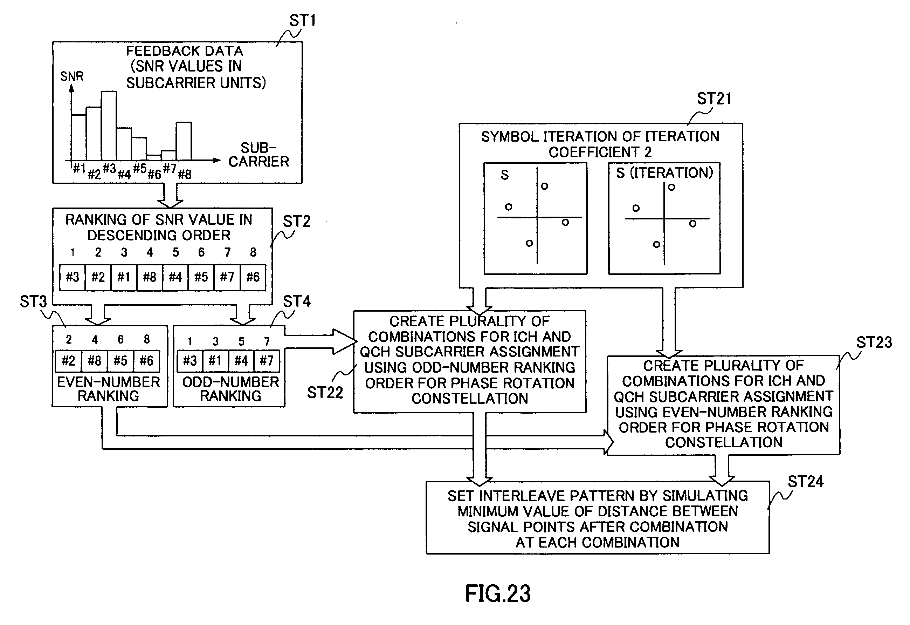

An example of the operation of multicarrier transmission apparatus 600 in such a case will be explained using FIG.23.

(1) Ranking section 107 receives feedback data (SNR values in subcarrier units) (ST1) and ranks the feedback data (ST2).
(2) Interleave pattern setting section 605 divides SNR value rankings into odd-number rankings and even-number rankings (ST3, ST4).
(3) Symbol iteration section 602 forms iteration symbols (ST21) .
(4) In ST22, using an order of odd-number rankings for a phase-rotated QPSK constellation as in the case of Embodiment 1, a combination is created such that the sum of odd-number rankings of subcarriers to which Ich components are assigned and odd-number rankings of subcarriers to which Qch components are assigned becomes constant. In this example, there are four combinations whereby the sum of odd-number rankings becomes constant. More specifically, the following four combinations are created. These combinations are created for all the four phase rotated QPSK signals.

· CombinationA: Ich of a symbol is assigned to subcarrier #3 and Qch is assigned to subcarrier #7.
· Combination B: Ich of a symbol is assigned to subcarrier #1 and Qch is assigned to subcarrier #4.
· Combination C: Ich of a symbol is assigned to subcarrier #4 and Qch is assigned to subcarrier #1.
· Combination D: Ich of a symbol is assigned to subcarrier #7 and Qch is assigned to subcarrier #3.

(5) In ST23, using an order of even-number rankings for a phase-rotated QPSK constellation as in the case of Embodiment 1, a combination is created such that the sum of even-number rankings of subcarriers to which Ich components are assigned and even-number rankings of subcarriers to which Qch components are assigned becomes constant. More specifically, the following four combinations are created. These combinations are created for all the four phase-rotated QPSK signals.

· Combination E: Ich of a symbol is assigned to subcarrier #2 and Qch is assigned to subcarrier #6.
· Combination F: Ich of a symbol is assigned to subcarrier #8 and Qch is assigned to subcarrier #5
· Combination G: Ich of a symbol is assigned to subcarrier #5 and Qch is assigned to subcarrier #8.
· Combination H: Ich of a symbol is assigned to subcarrier #6 and Qch is assigned to subcarrier #2.

(6) In ST24, an interleave pattern is set by selecting combinations A to D for each of four original symbols, selecting any one of combinations E to H for each of four iteration symbols and simulating one whereby a minimum value of the distance between signal points after combining the original symbols and iteration symbols increases averagely when those combinations are selected. That is, a combination whereby a minimum value of the distance between signal points after the combination increases averagely is selected. For example, combination A is selected for the original symbols and combination G is selected for the iteration symbols. A result of splicing these combinations together is set as an interleave pattern.

In short, the explanations of FIG.20 to FIG.23 can be summarized as follows: Symbol iteration section 602 forms the identical first and second symbols for sequentially input symbols and interleave pattern setting section 605 sets an interleave pattern whereby Ich of the first symbol and Qch of the second symbol sequentially assigned to subcarriers in descending order of channel quality and Qch of the first symbol and Ich of the second symbol are sequentially assigned to subcarriers in ascending order of channel quality. This causes the minimum value of the distance between signal points of a combined symbol of the first symbol and second symbol obtained on the receiving side to increase averagely, and therefore it is possible to prevent the bits of the combined symbol from including bits of high and low error rates.

This embodiment explains the case where the number of iterations is 2, but even in a case where the number of iterations is 3 or above, it is likewise possible to design an interleave pattern whereby subcarriers are assigned so that the number of subcarriers in a good channel condition is substantially equal to the number of subcarriers in a bad channel condition when calculated per original symbol and the minimum value of distances between signal points of the combined symbol at the receiver increases averagely.

14

(Other embodiments)

The above described embodiments explain the case where multicarrier transmission apparatuses 100, 300 and 600 set interleave patterns, but the present invention is not limited to this and interleave pattern setting processing similar to the above described processing may also be performed on the receiver side and interleave pattern information may be reported instead of propagation path information (channel quality information) as feedback information.

Furthermore, the above described embodiments explains the case where a scaling factor obtained from a variation in a pilot symbol is used as channel quality, but the present invention is not limited to this and it is possible to apply channel quality obtained by various conventionally proposed methods as channel quality of subcarriers. For example, it is possible to detect channel quality of subcarriers based on average power of data symbols of subcarriers and detect channel quality of subcarriers using a scaling factor obtained by the method of applying an IFFT to a delay profile and further use an SNR (Signal-to-Noise Ratio) of subcarriers as a channel quality value of subcarriers.

Furthermore, above described Embodiment 1 explains the case where channel quality of subcarriers is unknown during initial transmission, but if channel quality of subcarriers is known, it is also possible to set an interleave pattern corresponding to channel quality by interleave pattern setting section 108 from the time of initial transmission and perform modulation diversity modulation.

Furthermore, above described Embodiments 1 to 4 explains the case where Qch components are interleaved, but the present invention is not limited to this and it is also possible to interleave only Ich components or interleave both Ich components and Qch components and even in such a case, if an interleave pattern is adaptively set according to channel quality of subcarriers as in the case of the above described embodiments, it is possible to obtain the same effects as the above described embodiments.

Furthermore, the above described embodiments explains the case where phase rotation section 103 is provided in addition to mapping section 102 and the phases of the I component and Q component are rotated, but the present invention is not limited to this and if the mapping section performs mapping processing with phase rotation also taken into consideration, the phase rotation section may be omitted.

Furthermore, the above described embodiments have explained the case where the receiver measures channel quality (scaling factor and SNR or the like) of subcarriers, transmits the measurement result to the transmitter as feedback data and the transmitter ranks SNR values, determines an interleave pattern, transmits data subjected to modulation diversity modulation together with interleave pattern information to the receiver and the receiver creates a deinterleave pattern from the interleave pattern information and performs demodulation using this interleave pattern. However exchanges of control data between the multicarrier transmission apparatus and multicarrier reception apparatus according to the present invention are not limited to this. Some examples of exchanges of control data other than that of the above described embodiments will be shown below.

(i) Method of feeding back channel quality information

First, the receiver measures channel quality of subcarriers, ranks channel quality of subcarriers, determines a deinterleave pattern and then stores it. Next, the receiver transmits channel quality information to the transmitter as feedback data and the transmitter also ranks channel quality based on this and determines an interleave pattern. Then, the transmitter transmits data subjected to modulation diversity modulation to the receiver. The receiver demodulates the data subjected to modulation diversity modulation using the stored deinterleave pattern.

(ii) Method of feeding back ranking data

First, the receiver measures channel quality of subcarriers, ranks channel quality of subcarriers, determines a deinterleave pattern and then stores it.

The receiver then transmits ranking values to the transmitter as feedback data. The transmitter determines an interleave pattern from the ranking values and transmits data subjected to modulation diversity modulation to the receiver. The receiver demodulates the data subjected to modulation diversity modulation using the stored deinterleave pattern.

(iii) Method of feeding back delay profile

First, the receiver measures a delay profile and transmits the delay profile to the transmitter. Next, the transmitter obtains channel quality values by applying an FFT to the delay profile, ranks them, determines an interleave pattern and the transmitter transmits data subjected to modulation diversity modulation together with interleave pattern information to the receiver, and the receiver creates a deinterleave pattern from the interleave pattern information and performs demodulation using this interleave pattern.

(iv) Method of feeding back delay profile (No.2)

First, the receiver measures a delay profile and obtains channel quality of subcarriers based on this delay profile, ranks the channel quality, determines a deinterleave pattern and stores it. Next, the receiver transmits the delay profile to the transmitter, and the transmitter applies an FFT to the delay profile, obtains channel qualities, ranks them, determines an interleave pattern. The transmitter then transmits data subjected to modulation diversity modulation to the receiver. The receiver demodulates the data subjected to modulation diversity modulation using the stored deinterleave pattern.

Furthermore, above described Embodiments 2, 3 explains, as exchanges of control data when the transmitter and receiver are provided with interleave pattern tables, the case where the receiver measures channel quality of subcarriers, transmits the measurement result to the transmitter as feedback data and the transmitter selects an interleave pattern which can obtain a highest diversity gain from among the prestored interleave patterns and transmits data subjected to modulation diversity modulation together with interleave pattern numbers to the receiver and the receiver reads the reported interleave pattern from the interleave pattern table and performs demodulation. However, the present invention may also be adapted as follow:

That is, the receiver measures channel quality of subcarriers, the receiver selects an interleave pattern that can obtain a highest diversity gain from the interleave pattern table and stores the interleave pattern number. The receiver transmits the interleave pattern number to the transmitter as feedback information. The transmitter reads an interleave pattern of the reported interleave pattern number from the interleave pattern table, performs interleaving and transmits data subjected to modulation diversity modulation to the receiver.

Furthermore, the above described embodiments explain the case where the receiver measures channel quality of subcarriers, but depending on the access scheme, the transmitter may also measure channel quality of subcarriers. By so doing, it is possible to eliminate the necessity of transmitting channel quality information from the receiver to the transmitter, and thereby reduce feedback data. For example, a TDD (Time Division Duplex) scheme may be used as the access scheme. The TDD scheme is a scheme under which the same frequency band is used on an uplink channel and downlink channel and communication is carried out on a time-division basis. That is, the uplink channel has the same channel condition as that of the downlink channel. Taking advantage of this makes it possible to reduce feedback data.

For example, as in the case of Embodiment 1, when an interleave pattern is determined by ranking channel quality, the transmitter measures channel quality of subcarriers from received pilot signals or the like, ranks subcarriers based on the channel quality, thereby determines an interleave pattern, carries out modulation diversity modulation in the determined interleave pattern and transmits the data subjected to modulation diversity modulation and interleave pattern information. The receiver performs demodulation using the reported interleave pattern.

Furthermore, when an interleave pattern table is provided as in the cases of Embodiments 2, 3, the transmitter measures channel quality of subcarriers from received pilot signals or the like, selects an interleave pattern that can gain a highest diversity gain from the prestored interleave pattern based on the channel quality, transmits data subjected to modulation diversity modulation together with interleave pattern numbers to the receiver. The receiver reads an interleave pattern of the reported interleave pattern number from the interleave pattern table and performs demodulation using this interleave pattern.

Furthermore, the above described embodiments explain the case where interleave pattern setting sections 108, 605 set an interleave pattern so that the sum of channel quality rankings of subcarriers to which Ich components and Qch components are assigned is equal among symbols. However, it is not necessary that the sum is always be exactly equal, and it is possible to obtain the same effect as the embodiment by setting an interleave pattern such that the sum of channel quality ranking of subcarriers to which Ich components and Qch components are assigned is averaged among symbols

An aspect of the multicarrier transmission apparatus of the present invention adopts a configuration including a symbol formation section that forms symbols made up of Ich components and Qch components from transmission data, an interleaver that interleaves the Ich components and/or Qch components independently of each other, an IQ combination section that combines the interleaved Ich components and Qch components to obtain modulation diversity modulation symbols, an OFDM modulation section that assigns each modulation diversity modulation symbol to any one of a plurality of subcarriers which are orthogonal to one another and modulates subcarriers using the modulation diversity modulation symbol and an interleave pattern setting section that sets an interleave pattern in the interleaver according to channel quality of subcarriers.

According to this configuration, an interleave pattern of modulation diversity modulation is adaptively changed according to channel quality of subcarriers and a good diversity gain can be thereby obtained according to the propagation path characteristic.

Another aspect of the multicarrier transmission apparatus of the present invention adopts a configuration further including a ranking section that ranks the channel quality of subcarriers, wherein the interleave pattern setting section sets an interleave pattern such that the sum of rankings of subcarriers to which Ich components and Qch components of symbols before interleaving are assigned is averaged among symbols.

According to this configuration, it is possible to set an interleave pattern such that the sum of channel qualities of Ich components and Qch components is substantially equal among symbols before interleaving. As a result, diversity gains can be obtained uniformly for all symbols and the overall error correction rate characteristic can be thereby improved.

A further aspect of the multicarrier transmission apparatus of the present invention adopts a configuration further including an interleave pattern storage section that stores a plurality of interleave patterns, wherein the interleave pattern setting section performs a simulation using the plurality of interleave patterns and channel quality of subcarriers in advance and selects an interleave pattern whereby an optimum modulation diversity effect can be obtained from among the plurality of interleave patterns as the interleave pattern to be used for the interleaver.

According to this configuration, an optimum interleave pattern is selected from among provided interleave patterns and it is thereby easier to select the interleave pattern. Furthermore, when a deinterleave pattern on the receiving side is reported to the receiving side, only the corresponding interleave pattern number need to be transmitted, and it is possible to thereby reduce the amount of transmission information.

A still further aspect of the multicarrier transmission apparatus of the present invention adopts a configuration, wherein the interleave pattern setting section includes an interleaver that interleaves a channel quality value of subcarriers using an interleave pattern for Ich components and/or interleave pattern for Qch components, an addition section that adds up interleaved Ich channel quality values and Qch channel quality values in subcarrier units, a variance calculation section that calculates a variance value of the addition result and a minimum value calculation section that selects an interleave pattern having a minimum variance from among the plurality of interleave patterns.

A still further aspect of the multicarrier transmission apparatus of the present invention adopts a configuration, wherein the interleave pattern setting section includes an interleaver that interleaves the channel quality value of subcarriers using an interleave pattern for Ich components and/or an interleave pattern for Qch components, a subtraction section that performs subtractions between the channel quality values of interleaved Ich and channel quality values of Qch in subcarrier units, an absolute value addition section that calculates the sum of absolute values of subtraction results in subcarrier units and a maximum value calculation section that selects the interleave pattern having the maximum sum of the absolute values from among the plurality of interleave patterns.

According to these configurations, it is possible to select an interleave pattern whereby the sum of channel qualities of subcarriers to which Ich components are expected to be assigned and channel quality of subcarriers to which Qch components are expected to be assigned does not change among symbols so much. As a result, it is possible to obtain average modulation diversity gains for all symbols.

A still further aspect of the multicarrier transmission apparatus of the present invention adopts a configuration, further including an interleave information insertion section that inserts information about the interleave pattern set by the interleave pattern setting section into a transmission signal.

According to this configuration, the receiving side can accurately perform deinterleave processing based on the inserted interleave pattern information.

A still further aspect of the multicarrier transmission apparatus of the present invention adopts a configuration where the interleave pattern setting section sets an interleave pattern whereby the Ich components and Qch components are not assigned to subcarriers whose channel quality is a predetermined value or below.

According to this configuration, symbols are not assigned to subcarriers having a high probability of symbol errors on the receiving side, and it is possible to thereby reduce unnecessary transmit power.

A still further aspect of the multicarrier transmission apparatus of the present invention adopts a configuration, wherein the interleave pattern setting section sets an adaptive interleave pattern according to channel quality of subcarriers for the Ich components and Qch components assigned to the subcarriers having high channel quality and low channel quality and sets a random interleave pattern for the Ich components and Qch components assigned to the subcarriers having medium channel quality.

According to this configuration, the multicarrier reception apparatus does not feed back channel quality information about subcarriers having medium channel quality to the multicarrier transmission apparatus, and therefore it is possible to reduce the amount of feedback information accordingly. Note that even an adaptive interleave pattern corresponding to the channel quality is performed for subcarriers having medium channel quality, its diversity effect is substantially not different from that of random interleaving. Thus, it is possible to effectively reduce the amount of feedback information while maintaining the diversity effect.

A still further aspect of the multicarrier transmission apparatus of the present invention adopts a configuration, further including an iteration symbol formation section that forms identical first and second symbols for each of sequentially input symbols, wherein the interleave pattern setting section sets an interleave pattern whereby Ich of the first symbol and Qch of the second symbol are sequentially assigned to subcarriers in descending order of channel quality and Qch of the first symbol and Ich of the second symbol are sequentially assigned to subcarriers in ascending order of channel quality.

According to this configuration, a minimum value of the distance between signal points of the combined symbol of the first symbol and second symbol obtained on the receiving side increases averagely, and therefore it is possible to prevent the combined symbol from having bits with a high probability of errors and bits with a low probability of errors.

An aspect of the multicarrier reception apparatus of the present invention adopts a configuration including an OFDM demodulation section that extracts modulation diversity symbols superimposed on subcarriers of a received multicarrier signal, a deinterleaver that deinterleaves Ich components and/or Qch components of modulation diversity modulation symbols using an interleave pattern according to channel quality of subcarriers, an IQ combination section that combines the deinterleaved Ich components and Qch components and a demapping section that obtains received data by demapping symbols after the combination.

Another aspect of the multicarrier reception apparatus of the present invention adopts a configuration, wherein the deinterleaver performs deinterleave processing using an interleave pattern based on interleave information transmitted from the transmitting side.

According to these configurations, when the multicarrier transmission apparatus transmits a signal subjected to modulation diversity modulation processing with an interleave pattern adaptively changed according to channel quality, it is possible to correctly obtain received data before modulation from reception modulation diversity symbols.

A further aspect of the multicarrier reception apparatus of the present invention adopts a configuration, further including a propagation path state estimation section that obtains channel quality of subcarriers and a transmission section that transmits information indicating the channel quality of subcarriers to the multicarrier transmission apparatus that transmits a signal on which the modulation diversity modulation symbols are superimposed, wherein a plurality of adjacent subcarriers are grouped and one piece of channel quality information per group out of the channel quality information of subcarriers is transmitted to the multicarrier transmission apparatus.

A still further aspect of the multicarrier reception apparatus of the present invention adopts a configuration, further including a propagation path state estimation section that obtains channel quality of subcarriers, a transmission section that transmits information indicating the channel quality of subcarriers to the multicarrier transmission apparatus that transmits a signal on which the modulation diversity modulation symbols are superimposed and a transmission section that transmits information indicating channel quality of subcarriers to the reception section of the multicarrier transmission apparatus that transmits a signal on which the modulation diversity modulation symbols are superimposed, wherein the transmission section transmits the channel quality information to the multicarrier transmission apparatus at shorter time intervals as a Doppler frequency increases.

A still further aspect of the multicarrier reception apparatus of the present invention adopts a configuration, further including a propagation path state estimation section that obtains channel quality of subcarriers and a transmission section that transmits information indicating the channel quality of subcarriers to the multicarrier transmission apparatus that transmits a signal on which the modulation diversity modulation symbols are superimposed, wherein when the Doppler frequency equals or exceeds a predetermined value, transmission of information indicating the channel quality of subcarriers to the multicarrier transmission apparatus is stopped.

A still further aspect of the multicarrier reception apparatus of the present invention adopts a configuration, further including a propagation path state estimation section that obtains channel quality of subcarriers and a transmission section that transmits information indicating the channel quality of subcarriers to the multicarrier transmission apparatus that transmits a signal on which the modulation diversity modulation symbols are superimposed, wherein the channel quality of subcarriers is classified according to the degree of channel quality and information indicating a class of subcarriers is transmitted to the multicarrier transmission apparatus as information indicating the channel quality of subcarriers.

According to these configurations, it is possible to report accurate channel quality information to the multicarrier transmission apparatus while suppressing the amount of feedback data or feedback count.

An aspect of the multicarrier communication method of the present invention includes a step of detecting channel quality of subcarriers and a modulation diversity modulation step of carrying out modulation diversity modulation while adaptively changing an interleave pattern of Ich components and/or Qch components according to channel quality of subcarriers.

The present invention is not limited to the above described embodiments but can be implemented modified in various ways.

As explained so far, according to the present invention, it is possible to further improve the error correction rate characteristic when a modulation diversity modulation/demodulation technology is applied.

This application is based on Japanese Patent ApplicationNo. 2003-274366 filed on July 14, 2003, entire content of which is expressly incorporated by reference herein. Industrial Applicability

The present invention is widely applicable to radio communication equipment that carries out modulation diversity modulation/demodulation.

**Claims**

1.  A multicarrier transmission apparatus comprising:

    a symbol formation section that forms symbols made up of Ich components and Qch components from transmission data;
    an interleaver that interleaves said Ich components and/or Qch components independently of each other;
    an IQ combination section that combines the interleaved Ich components and Qch components to obtain modulation diversity modulation symbols;
    an OFDM modulation section that assigns each modulation diversity modulation symbol to any one of a plurality of subcarriers which are orthogonal to one another and modulates subcarriers using the modulation diversity modulation symbol; and
    an interleave pattern setting section that sets an interleave pattern in said interleaver according to channel quality of said subcarriers

2.  The multicarrier transmission apparatus according to claim 1, further comprising a ranking section that ranks the channel quality of said subcarriers wherein said interleave pattern setting section sets an interleave pattern such that the sum of rankings of subcarriers to which Ich components and Qch components of said symbols before interleaving are assigned is averaged among symbols.

3.  The multicarrier transmission apparatus according to claim 1, further comprising an interleave pattern storage section that stores a plurality of interleave patterns, wherein said interleave pattern setting section performs a simulation using said plurality of interleave patterns and channel quality of subcarriers in advance and selects an interleave pattern whereby an optimum modulation diversity effect can be obtained from among said plurality of interleave patterns as the interleave pattern to be used for said interleaver.

4.  The multicarrier transmission apparatus according to claim 1, wherein said interleave pattern setting section comprises:

    an interleaver that interleaves a channel quality value of said subcarrier using an interleave pattern for Ich components and/or interleave pattern for Qch components;
    an addition section that adds up interleaved Ich channel quality values and Qch channel quality values in subcarrier units;
    a variance calculation section that calculates a variance value of the addition result; and
    a minimum value calculation section that selects an interleave pattern having a minimum variance from among the plurality of interleave patterns.

5.  The multicarrier transmission apparatus according to claim 1,
    wherein said interleave pattern setting section comprises:

    an interleaver that interleaves the channel quality value of said subcarriers using an interleave pattern for Ich components and/or an interleave pattern for Qch components;
    a subtraction section that performs subtractions between the channel quality values of interleaved Ich and channel quality values of Qch in subcarrier units;
    an absolute value addition section that calculates the sum of absolute values of subtraction results in subcarrier units; and
    a maximum value calculation section that selects the interleave pattern having the maximum sum of said absolute values from among the plurality of interleave patterns.

6.  The multicarrier transmission apparatus according to claim 1, further comprising an interleave information insertion section that inserts information about said interleave pattern set by said interleave pattern setting section into a transmission signal.

7.  The multicarrier transmission apparatus according to claim 1, wherein said interleave pattern setting section sets an interleave pattern whereby said Ich components and Qch components are not assigned to subcarriers whose channel quality is a predetermined value or below.

8.  The multicarrier transmission apparatus according to claim 1, wherein said interleave pattern setting section sets an adaptive interleave pattern according to channel quality of subcarriers for said Ich components and Qch components assigned to said subcarriers having high channel quality and low channel quality and sets a random interleave pattern for said Ich components and Qch components assigned to said subcarriers having medium channel quality.

9. The multicarrier transmission apparatus according to claim 1, further comprising
an iteration symbol formation section that forms identical first and second symbols for each of sequentially input symbols,
wherein said interleave pattern setting section sets an interleave pattern whereby Ich of said first symbol and Qch of said second symbol are sequentially assigned to subcarriers in descending order of channel quality and Qch of said first symbol and Ich of said second symbol are sequentially assigned to subcarriers in ascending order of channel quality.

10. A multicarrier reception apparatus comprising:

    an OFDM demodulation section that extracts modulation diversity symbols superimposed on subcarriers of a received multicarrier signal;
    a deinterleaver that deinterleaves Ich components and/or Qch components of said modulation diversity modulation symbols using an interleave pattern according to channel quality of subcarriers;
    an IQ combination section that combines the deinterleaved Ich components and Qch components; and
    a demapping section that obtains received data by demapping symbols after the combination.

11. The multicarrier reception apparatus according to claim 10, wherein said deinterleaver performs deinterleave processing using an interleave pattern based on interleave information transmitted from the transmitting side.

12. The multicarrier reception apparatus according to claim 10, further comprising:

    a propagation path state estimation section that obtains channel quality of subcarriers; and
    a transmission section that transmits information indicating the channel quality of said subcarriers to the multicarrier transmission apparatus that transmits a signal on which said modulation diversity modulation symbols are superimposed,
    wherein a plurality of adjacent subcarriers are grouped and one piece of channel quality information per group out of the channel quality information of said subcarriers is transmitted to said multicarrier transmission apparatus.

13. The multicarrier reception apparatus according to claim 10, further comprising:

    a propagation path state estimation section that obtains channel quality of subcarriers; and a transmission section that transmits information indicating the channel quality of said subcarriers to the multicarrier transmission apparatus that transmits a signal on which said modulation diversity modulation symbols are superimposed,
    wherein said channel quality information is transmitted to said multicarrier transmission apparatus at shorter time intervals as a Doppler frequency increases.

14. The multicarrier reception apparatus according to claim 10, further comprising:

    a propagation path state estimation section that obtains channel quality of subcarriers; and
    a transmission section that transmits information indicating the channel quality of said subcarriers to the multicarrier transmission apparatus that transmits a signal on which said modulation diversity modulation symbols are superimposed,
    wherein when the Doppler frequency equals or exceeds a predetermined value, transmission of information indicating the channel quality of said subcarriers to said multicarrier transmission apparatus is stopped.

15. The multicarrier reception apparatus according to claim 10, further comprising:

    a propagation path state estimation section that obtains channel quality of subcarriers; and
    a transmission section that transmits information indicating the channel quality of said subcarriers to the multicarrier transmission apparatus that transmits a signal on which said modulation diversity modulation symbols are superimposed,
    wherein the channel quality of said subcarriers is classified according to the degree of channel quality and information indicating a class of subcarriers is transmitted to said multicarrier transmission apparatus as information indicating the channel quality of said subcarriers.

**16.** A multicarrier communication method comprising:

a step of detecting channel quality of subcarriers; and
a modulation diversity modulation step of carrying out modulation diversity modulation while adaptively changing an interleave pattern of Ich components and/or Qch components according to channel quality of subcarriers.

**Amended claims under Art. 19.1 PCT**

**1.** A multicarrier transmission apparatus comprising:

a symbol formation section that forms symbols made up of Ich components and Qch components from transmission data;
an interleaver that interleaves said Ich components and/or Qch components independently of each other;
an IQ combination section that combines the interleaved Ich components and Qch components and obtains modulation diversity modulation symbols;
an OFDM modulation section that assigns modulation diversity modulation symbols to any one of a plurality of subcarriers which are orthogonal to one another and modulates subcarriers using the modulation diversity modulation symbols; and
an interleave pattern setting section that sets an interleave pattern in said interleaver according to channel quality of said subcarriers.

**2.** The multicarrier transmission apparatus according to claim 1, further comprising
a ranking section that ranks the channel quality of said subcarriers, wherein
said interleave pattern setting section sets an interleave pattern such that the sum of the rankings of subcarriers to which Ich components and Qch components of said symbols before interleaving are assigned is averaged among symbols.

**3.** The multicarrier transmission apparatus according to claim 1, further comprising
an interleave pattern storage section that stores a plurality of interleave patterns, wherein
said interleave pattern setting section performs a simulation using said plurality of interleave patterns and channel qualityof subcarriers in advance and selects an interleave pattern whereby an optimum modulation diversity effect can be obtained from among said plurality of interleave patterns as the interleave pattern to be used for said interleaver.

**4.** The multicarrier transmission apparatus according to claim 1, wherein said interleave pattern setting section comprises:

an interleaver that interleaves a channel quality value of said subcarriers using an interleave pattern for Ich components and/or interleave pattern for Qch components;
an addition section that adds up interleaved Ich channel quality values and Qch channel quality values in subcarrier units;
a variance calculation section that calculates a variance value of the addition result; and
a minimum value calculation section that selects an interleave pattern having a minimum variance from among the plurality of interleave patterns.

**5.** The multicarrier transmission apparatus according to claim 1, wherein said interleave pattern setting section comprises:

an interleaver that interleaves the channel quality value of said subcarriers using an interleave pattern for Ich components and/or an interleave pattern for Qch components;
a subtraction section that performs subtractions between the channel quality values of interleaved Ich and channel quality values of Qch in subcarrier units;
an absolute value addition section that calculates the sum of absolute values of subtraction results in subcarrier units; and

a maximum value calculation section that selects the interleave pattern having a maximum sum of said absolute values from among the plurality of interleave patterns.

**6.** Deleted)

**7.** The multicarrier transmission apparatus according to claim 1, wherein said interleave pattern setting section sets an interleave pattern whereby said Ich components and Qch components are not assigned to subcarriers whose channel quality is a predetermined value or below.

**8.** The multicarrier transmission apparatus according to claim 1, wherein said interleave pattern setting section sets an adaptive interleave pattern according to channel quality of subcarriers for said Ich components and Qch components assigned to said subcarriers having high channel quality and low channel quality and sets a random interleave pattern for said Ich components and Qch components assigned to said subcarriers having medium channel quality.

**9.** The multicarrier transmission apparatus according to claim 1, further comprising an iteration symbol formation section that forms identical first and second symbols for sequentially input symbols, wherein
said interleave pattern setting section sets an interleave pattern whereby Ich of said first symbol and Qch of said second symbol are sequentially assigned to subcarriers in descending order of channel quality and Qch of said first symbol and Ich of said second symbol are sequentially assigned to subcarriers in ascending order of channel quality.

**10.** A multicarrier reception apparatus comprising:

an OFDM demodulation section that extracts modulation diversity symbols superimposed on subcarriers of a received multicarrier signal;
a deinterleaver that deinterleaves Ich components and/or Qch components of said modulation diversity modulation symbols using an interleave pattern according to channel quality of subcarriers;
an IQ combination section that combines the deinterleaved Ich components and Qch components; and
a demapping section that obtains received data by demapping the symbols after the combination.

**11.** Deleted)

**12.** The multicarrier reception apparatus according to claim 10, further comprising:

a propagation path state estimation section that obtains channel quality of subcarriers; and
a transmission section that transmits information indicating the channel quality of said subcarriers to the multicarrier transmission apparatus that transmits a signal on which said modulation diversity modulation symbols are superimposed,
wherein a plurality of adjacent subcarriers are grouped and one piece of channel quality information per group out of the channel quality information of said subcarriers is transmitted to said multicarrier transmission apparatus.

**13.** The multicarrier reception apparatus according to claim 10, further comprising:

a propagation path state estimation section that obtains channel quality of subcarriers; and
a transmission section that transmits information indicating the channel quality of said subcarriers to the multicarrier transmission apparatus that transmits a signal on which said modulation diversity modulation symbols are superimposed,
wherein said channel quality information is transmitted to said multicarrier transmission apparatus at shorter time intervals as a Doppler frequency increases.

**14.** The multicarrier reception apparatus according to claim 10, further comprising:

a propagation path state estimation section that obtains channel quality of subcarriers; and
a transmission section that transmits information indicating the channel quality of said subcarriers to the multicarrier transmission apparatus that transmits a signal on which said modulation diversity modulation symbols are superimposed,
wherein when the Doppler frequency equals to or exceeds a predetermined value, transmission of information indicating the channel quality of said subcarriers to said multicarrier transmission apparatus is stopped.

**15.** The multicarrier reception apparatus according to claim 10, further comprising:

a propagation path state estimation section that obtains channel quality of subcarriers; and
a transmission section that transmits information indicating the channel quality of said subcarriers to the multicarrier transmission apparatus that transmits a signal on which said modulation diversity modulation symbols are superimposed,
wherein the channel quality of said subcarriers is classified according to the degree of channel quality and information indicating a class of subcarriers is transmitted to said multicarrier transmission apparatus as information indicating the channel quality of said subcarriers.

**16.** A multicarrier communication method comprising:

a step of detecting channel quality of subcarriers; and
a modulation diversity modulation step of carrying out modulation diversity modulation while adaptively changing an interleave pattern of Ich components and/or Qch components according to channel quality of subcarriers.

(a)

TRANSMITTING SIDE

Qch

10

00

11

01

Ich

(b)

CHANNEL CONDITION

A        B        SUBCARRIER

(c)

RECEIVING SIDE

10

00

01

11

FIG.1
(PRIOR ART)

FIG.2 (PRIOR ART)

TRANSMISSION DATA

10
11
12 MAPPING
13 PHASE ROTATION
14 IQ SEPARATION
15 IQ COMBINATION
16 INTERLEAVER
17 S/P
18 IFFT
19 RADIO TRANSMISSION

RECEIVED DATA

20
21
22 RADIO RECEPTION
23 FFT
24 P/S
25 IQ SEPARATION
26 IQ COMBINATION
27 DEINTERLEAVER
28 PHASE ROTATION
29 DEMAPPING

FIG.3

EP 1 635 495 A1

MULTICARRIER TRANSMISSION APPARATUS

TIME

FIRST TRANSMISSION

SECOND TRANSMISSION

THIRD TRANSMISSION

REPORT OF PROPAGATION PATH INFORMATION AT FIRST TRANSMISSION

REPORT OF PROPAGATION PATH INFORMATION AT SECOND TRANSMISSION

MULTICARRIER RECEPTION APPARATUS

TIME

FIG.4

SCALING FACTOR

FIG.5A

FREQUENCY

FIG.5B

| SUBCARRIER NUMBER | #1 | #2 | #3 | #4 |
|---|---|---|---|---|
| SCALING FACTOR VALUE 0 | 5 | 1 | 3 | 2 |
| SCALING FACTOR RANKING | 1 | 4 | 2 | 3 |
| ASSIGNMENT OF TRANSMISSION SYMBOL ICH | $i_1$ | $i_2$ | $i_3$ | $i_4$ |
| ASSIGNMENT OF TRANSMISSION SYMBOL QCH DERIVED FROM EXPRESSION (1) | $q_2$ | $q_1$ | $q_4$ | $q_3$ |
| ASSIGNMENT OF TRANSMISSION SYMBOL QCH WHEN INTERLEAVER WITH 2 SUBCARRIER SHIFTS IS USED | $q_3$ | $q_4$ | $q_1$ | $q_2$ |

**FIG.6**

**FIG.7**

FIG.8

EP 1 635 495 A1

FIG.9

FIG.10

FIG.11

EP 1 635 495 A1

FIG.12

501 INTERLEAVE PATTERN SETTING SECTION

106 INTERLEAVER

109 INTERLEAVE INFORMATION INSERTION SECTION

302 INTERLEAVE PATTERN TABLE

502 INTERLEAVER

503 SUBTRACTION SECTION

504 ABSOLUTE VALUE ADDITION SECTION

505 STORAGE SECTION

506 MAXIMUM VALUE CALCULATION SECTION

PROPAGATION PATH STATE ESTIMATION INFORMATION

FIG.13A

SNR VALUES IN SUBCARRIER UNITS
MEASURED AT RECEIVER

SNR AREA
NUMBER

SNR

THRESHOLD A  6dB -------

THRESHOLD B  0dB -------

3

2

1

SUBCARRIER

#1  #2  #3  #4  #5  #6  #7  #8  #9  #10

FIG.13B

| #1 | #2 | #3 | #4 | #5 | #6 | #7 | #8 | #9 | #10 |
|----|----|----|----|----|----|----|----|----|-----|
| 2  | 3  | 3  | 2  | 1  | 1  | 1  | 2  | 2  | 2   |

EP 1 635 495 A1

FIG.14A

SNR VALUES IN SUBCARRIER UNITS MEASURED AT RECEIVER

SNR

#1 #2 #3 #4 #5 #6 #7 #8 #9 #10 → SUBCARRIER

FIG.14B

| 1 | 2 | 3 | 4 | 5 | 6 | 7 | 8 | 9 | 10 |
|---|---|---|---|---|---|---|---|---|----|
| #3 | #2 | #9 | #1 | #10 | #8 | #4 | #5 | #7 | #6 |

EP 1 635 495 A1

FIG.15A

SNR VALUES IN SUBCARRIER UNITS MEASURED AT RECEIVER

SNR

SUBCARRIER HAVING VERY LOW SNR

THRESHOLD C  0dB

#1 #2 #3 #4 #5 #6 #7 #8 #9 #10   SUBCARRIER

FIG.15B

| #1 | #2 | #3 | #4 | #5 | #6 | #7 | #8 | #9 | #10 |
|----|----|----|----|----|----|----|----|----|-----|
| #3 | #2 | #9 | #1 | #10 | #8 | #4 | #5 | #7 | |

NOT SENT

FIG.16A

SNR VALUES IN SUBCARRIER UNITS
MEASURED AT RECEIVER

SNR AREA
NUMBER

SNR

THRESHOLD E  6dB

THRESHOLD D  0dB

3

2

1

#1 #2 #3 #4 #5 #6 #7 #8 #9 #10      SUBCARRIER

FIG.16B

| 1 | 2 | 3 |
|---|---|---|
| #3 | #2 | #9 |

FIG.16C

| 1 | 2 | 3 |
|---|---|---|
| #6 | #5 | #7 |

FIG.16D

| #1 | #10 #8 | #4 |
|---|---|---|

NOT SENT

EP 1 635 495 A1

SNR VALUE RANKING ORDER ESTIMATED FROM FEEDBACK DATA

1　2　3　4　5　6　7　8　9　10

| #3 | #2 | #9 | #1,#4,#8,#10 | #7 | #5 | #6 |

USE RANDOM INTERLEAVE

USE ADAPTIVE INTERLEAVE

FIG.17

EP 1 635 495 A1

PROBABILITY
DENSITY

THRESHOLD D
0dB

THRESHOLD E
6dB

SNR

AREA WITH HIGH DIVERSITY
EFFECT (SUBCARRIER WITH
BAD CHANNEL CONDITION)

AREA WITH HIGH DIVERSITY
EFFECT (SUBCARRIER HAVING
EXTRA CAPACITY)

AREA WITH LOW
DIVERSITY EFFECT

FIG.18

FIG.19

FIG.20

ORIGINAL MODULATION SYMBOL — ST11

S1 · S2

SYMBOL ITERATION WITH ITERATION COEFFICIENT 2 — ST12

S1 · S2 · S1(ITERATION) · S2(ITERATION)

ST1

FEEDBACK DATA (SNR VALUES IN SUBCARRIER UNITS)

SNR

SUB-CARRIER

#1 #2 #3 #4 #5 #6 #7 #8

ST2

RANKING OF SNR VALUE IN DESCENDING ORDER

| 1 | 2 | 3 | 4 | 5 | 6 | 7 | 8 |
|---|---|---|---|---|---|---|---|
| #3 | #2 | #1 | #8 | #4 | #5 | #7 | #6 |

ST3

| 2 | 4 | 6 | 8 |
|---|---|---|---|
| #2 | #8 | #5 | #6 |

EVEN-NUMBER RANKING

ST4

| 1 | 3 | 5 | 7 |
|---|---|---|---|
| #3 | #1 | #4 | #7 |

ODD-NUMBER RANKING

ST5

| 8 | 6 | 4 | 2 |
|---|---|---|---|
| #6 | #5 | #8 | #2 |

EVEN-NUMBER RANKING (CHANGING IN ASCENDING ORDER)

ST13

SET INTERLEAVERS FOR ICH AND QCH USING ODD-NUMBER RANKING ORDER FOR ORIGINAL SYMBOLS S1, S2

ST14

SET INTERLEAVERS FOR ICH AND QCH USING EVEN-NUMBER RANKING (ASCENDING ORDER OF SNR VALUES) FOR ITERATED S1 (ITERATION), S2 (ITERATION)

ST15

SPLICE INTERLEAVE PATTERN SET IN ST13 AND INTERLEAVE PATTERN SET IN ST14

FIG.21

FIG.22

FIG.23

ST1 — FEEDBACK DATA (SNR VALUES IN SUBCARRIER UNITS)

SNR / SUB-CARRIER
#1 #2 #3 #4 #5 #6 #7 #8

ST2 — RANKING OF SNR VALUE IN DESCENDING ORDER

| 1 | 2 | 3 | 4 | 5 | 6 | 7 | 8 |
| #3 | #2 | #1 | #8 | #4 | #5 | #7 | #6 |

ST3 — EVEN-NUMBER RANKING

| 2 | 4 | 6 | 8 |
| #2 | #8 | #5 | #6 |

ST4 — ODD-NUMBER RANKING

| 1 | 3 | 5 | 7 |
| #3 | #1 | #4 | #7 |

ST22 — CREATE PLURALITY OF COMBINATIONS FOR ICH AND QCH SUBCARRIER ASSIGNMENT USING ODD-NUMBER RANKING ORDER FOR PHASE ROTATION CONSTELLATION

ST21 — SYMBOL ITERATION OF ITERATION COEFFICIENT 2

S    S (ITERATION)

ST23 — CREATE PLURALITY OF COMBINATIONS FOR ICH AND QCH SUBCARRIER ASSIGNMENT USING EVEN-NUMBER RANKING ORDER FOR PHASE ROTATION CONSTELLATION

ST24 — SET INTERLEAVE PATTERN BY SIMULATING MINIMUM VALUE OF DISTANCE BETWEEN SIGNAL POINTS AFTER COMBINATION AT EACH COMBINATION

## INTERNATIONAL SEARCH REPORT

| International application No. |
| --- |
| PCT/JP2004/010357 |

**A. CLASSIFICATION OF SUBJECT MATTER**
Int.Cl$^7$ H04J11/00

According to International Patent Classification (IPC) or to both national classification and IPC

**B. FIELDS SEARCHED**

Minimum documentation searched (classification system followed by classification symbols)
Int.Cl$^7$ H04J11/00

Documentation searched other than minimum documentation to the extent that such documents are included in the fields searched
| | | | |
| --- | --- | --- | --- |
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| P,X | Susumu FUKUOKA, Isamu YOSHII, Sadaki NIKI, Katsuhiko HIRAMATSU, "OFDM ni Okeru Modulation Diversity Hoshiki no Tekio Interleaver ni Kansuru Kento", 2003 Nen The Institute of Electronics, Information and Communication Engineers Society Taikai Koen Ronbunshu 1, 10 September, 2003 (10.09.03), pages 456 | 1,2,10,12,16 |
| Y<br>A | 3GPP TSG RAN WG1 #31 R1-030156, "Modulation diversity for OFDM", 21 February, 2003 (21.02.03) | 1,6,10,11,16<br>2–5,7–9,<br>12–15 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 October, 2004 (14.10.04) | Date of mailing of the international search report<br>02 November, 2004 (02.11.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/010357 |

**C (Continuation). DOCUMENTS CONSIDERED TO BE RELEVANT**

| Category* | Citation of document, with indication, where appropriate, of the relevant passages | Relevant to claim No. |
|---|---|---|
| Y<br>A | JP 07-202852 A  (PFU Ltd.),<br>04 August, 1995 (04.08.95),<br>Full text; all drawings<br>& JP 3014261 B2 | 1,6,10,11,16<br>2-5,7-9,<br>12-15 |
| Y<br>A | JP 2001-230735 A  (Director General of<br>Communications Research Laboratory),<br>24 August, 2001 (24.08.01),<br>Par. No. [0019]<br>& JP 3567167 B2 | 1,10<br>2-9,11-16 |
| A | JP 08-223624 A  (NEC Corp.),<br>30 August, 1996 (30.08.96),<br>Full text; all drawings<br>& EP 0727891 A2, B1      & CN 1138257 A<br>& US 5835508 A          & KR 216166 B1 | 1-16 |
| A | Slimane Ben Slimane, "An Improved PSK<br>Scheme for Fading Channels", Global<br>Telecommunications Conference, 1996.<br>GLOBECOM '96. 'Communications: The<br>Key to Global Prosperity, Vol.2, 1996.<br>11, pages 1276 to 1280 | 1-16 |

Form PCT/ISA/210 (continuation of second sheet) (January 2004)